# EUROPEAN PATENT SPECIFICATION

(11) **EP 4 061 897 B1**
(45) Date of publication and mention of the grant of the patent: **08.01.2025**
(21) Application number: 20816616.5
(22) Date of filing: 19.11.2020
(51) Int. Cl.: C09D 11/101, C09D 11/38, C09D 11/322

(54) **LAMINATE HAVING INORGANIC NANOPARTICLE-CONTAINING WEAR- RESISTANT LAYER AND INORGANIC NANOPARTICLE-CONTAINING RADIATION-CURABLE INK HAVING LOW VISCOSITY**
LAMINAT MIT EINER VERSCHLEISSFESTEN SCHICHT MIT ANORGANISCHEN NANOTEILCHEN UND NIEDRIGVISKOSE STRAHLUNGSHÄRTBARE TINTE MIT ANORGANISCHEN NANOTEILCHEN
STRATIFIÉ AYANT UNE COUCHE RÉSISTANTE À L'USURE CONTENANT DES NANOPARTICULES INORGANIQUES ET UNE ENCRE DURCISSABLE PAR RAYONNEMENT CONTENANT DES NANOPARTICULES INORGANIQUES AYANT UNE FAIBLE VISCOSITÉ

(30) Priority: 20.11.2019 JP 2019209790
(43) Date of publication of application: 28.09.2022
(73) Proprietor: 3M Innovative Properties Company, Saint Paul, Minnesota 55133-3427 (US)
(72) Inventor: SUGIYAMA, Naota, Tokyo 141--8684 (JP); ONO, Katsuya, Tokyo 141--8684 (JP); POKORNY, Richard J., Saint Paul, Minnesota 55133-3427 (US); IHARA, Taiki, Tokyo 141--8684 (JP); HAYASHI, Hiroki, Tokyo 141--8684 (JP); MACKEY, Sonja S., Saint Paul, Minnesota 55133-3427 (US); HATANAKA, Hideyuki, Tokyo 141--8684 (JP)
(74) Representative: Mathys & Squire
(86) International application number: PCT/IB2020/060924
(87) International publication number: WO 2021/099990

(56) References cited:
- EP-A1- 3 480 229
- WO-A1-2016/036507
- WO-A1-2016/178989
- WO-A1-2020/017277
- WO-A2-02/053659

## Description

### Technical Field

The present disclosure relates to a laminate having an inorganic nanoparticle-containing wear-resistant layer and an inorganic nanoparticle-containing radiation-curable ink.

### Background

Ink having low viscosity, such as an inkjet ink, has been mainly used for a recording medium, such as paper; however, in recent years, besides such usage, for example, ink having low viscosity has been used in a wide variety of use, such as a decorative film used for covering a surface of a molded article.

Patent Document 1 (JP 2015-067656 A) describes an ultraviolet-curable inkjet ink containing a reactive monomer, a reactive oligomer, and a photopolymerization initiator, the reactive monomer being a cyclic structure-containing polymerizable monofunctional monomer containing no aromatic ring and no lactam ring in the molecule, and the photopolymerization initiator being a hydroxyketone-based photopolymerization initiator.

Patent Document 2 (JP 2015-533897 T) describes a radiation-curable inkjet ink composition containing a colorant and 2,2,6,6-tetramethylpiperidinyl compounds, a first 2,2,6,6-tetramethylpiperidinyl compound being present in a concentration of greater than 0.5 wt% in the radiation-curable ink composition, a hindered amine group of the first 2,2,6,6-tetramethylpiperidinyl compound being only substituted by carbon or hydrogen, being a solid at 20°C, and containing no carbon-carbon double bond. Further documents disclosing inks and representing a relevant prior art are EP3480229, WO02053659, WO2016178989 and WO2016036507.

For example, in the case where wear resistance is imparted to a protection layer, such as a decorative film, inorganic particles may be contained in an ink for the protection layer to be coated. However, when such inorganic particles are contained in an ink, typically, the viscosity of the ink increases, and thus the ink may not be discharged or coated by, for example, an inkjet printing method, a gravure coating method, or a bar coating method, which requires use of a low-viscosity ink. Furthermore, for example, as the inorganic particles in the ink aggregate, the bulky inorganic particles may clog a discharging nozzle of the ink or a wire wound around a coating roll, and thus printing or coating failure may be caused.

### Summary

The present disclosure provides a laminate having an inorganic nanoparticle-containing wear-resistant layer formed by a low-viscosity ink and an inorganic nanoparticle-containing radiation-curable ink having low viscosity.

According to an embodiment of the present disclosure, a laminate containing a substrate, and a wear-resistant layer containing a cured product of a radiation-curable ink, the radiation-curable ink containing inorganic nanoparticles, a compound represented by Formula (1) below, and at least one selected from the group consisting of a radiation-curable polymerizable oligomer and a radiation-curable polymerizable monomer, is provided.

R¹-R²-Si(OR³)₃ Formula (1)

In Formula (I), R¹ is an acryloyl group or a methacryloyl group, R² is an alkylene group having from 5 to 12 carbon atoms, and R³ is an alkyl group having from 1 to 4 carbon atoms.

According to another embodiment of the present disclosure, a radiation-curable ink containing inorganic nanoparticles, a compound represented by Formula (1) below, and at least one selected from the group consisting of a radiation-curable polymerizable oligomer and a radiation-curable polymerizable monomer, the initial viscosity at 55°C being 18.0 mPa·s or less, is provided.

R¹-R²-Si(OR³)₃ Formula (1)

In Formula (I), R¹ is an acryloyl group or a methacryloyl group, R² is an alkylene group having from 5 to 12 carbon atoms, and R³ is an alkyl group having from 1 to 4 carbon atoms.

According to the present disclosure, a laminate having an inorganic nanoparticle-containing wear-resistant layer formed by a low-viscosity ink and an inorganic nanoparticle-containing radiation-curable ink having low viscosity can be provided.

### Brief Description of the Drawings

FIG. 1 is a schematic cross-sectional view of a laminate according to one embodiment of the present disclosure.
FIG. 2A is an SEM photograph of a laminate surface of Comparative Example 3 that has an inkjet printing layer containing no inorganic nanoparticles, at an angle of inclination of 10°. FIG. 2B is an SEM photograph of a laminate top face of Comparative Example 3. FIG. 2C is an SEM photograph of a laminate cross section of Comparative Example 3.
FIG. 3A is an SEM photograph of a laminate surface of Example 25 that has a wear-resistant layer containing inorganic nanoparticles, at an angle of inclination of 10°. FIG. 3B is an SEM photograph of a laminate top face of Example 25. FIG. 3C is an SEM photograph of a laminate cross section of Example 25.
FIG. 4A is an optical photomicrograph of a laminate top face of Comparative Example 3 after Taber abrasion test. FIG. 4B is an optical photomicrograph of a laminate top face of Example 25 after Taber abrasion test.

### Description of Embodiments

Hereinafter, the present invention will be described in more detail to exemplify representative embodiments of the present invention, but the present invention is not limited to these embodiments.

In the present disclosure, "non-functional" refers to a property that does not undergo curing reaction with, for example, a compound represented by Formula (1) or a radiation-curable oligomer or monomer contained in the ink even when exposure to radiation takes place.

In the present disclosure, "nanoparticle" refers to a particle having a size of nanometer order, that is, less than 1000 nm.

In the present disclosure, "radiation-curable" refers to a property that allows curing by radiation, such as UV radiation, electron beam, and X-ray.

In the present disclosure, "(meth)acryl" means acryl or methacryl, "(meth)acrylate" means acrylate or methacrylate, and "(meth)acryloyl" means "acryloyl" or "methacryloyl."

In the present disclosure, "monofunctional monomer" refers to a compound having only one functional group that is reactive and typically has a weight average molecular weight of less than 1000.

In the present disclosure, "oligomer" refers to a compound having a plurality of units derived from a monomer, and typically has a weight average molecular weight of 500 or greater or 1000 or greater. For example, "urethane (meth)acrylate oligomer" is a compound containing a plurality of units having a urethane bond and containing a (meth)acryloyloxy group.

In the present disclosure, for example, "on" as in "a decorative layer is disposed on a substrate" is intended to mean that the decorative layer is disposed directly on a top side of the substrate, or that the decorative layer is indirectly disposed on a top side of the substrate with another layer interposed between the decorative layer and the substrate.

In the present disclosure, for example, "below" as in "an adhesive layer disposed below a substrate" is intended to mean that the adhesive layer being disposed directly on a bottom side of the substrate, or the adhesive layer being indirectly disposed on a bottom side of the substrate film with another layer interposed between the adhesive layer and the substrate film.

In the present disclosure, "film" also includes an article referred to as a "sheet."

In the present disclosure, the term "substantially" refers to including variations caused by for instance manufacturing errors and is intended to mean that approximately +/-20% variation is acceptable.

In the present disclosure, "transparent" means that an average transmittance in a visible light region (wavelength from 400 nm to 700 nm) measured in accordance with JIS K 7375 is 80% or greater, and may be desirably 85% or greater, or 90% or greater.

In the present disclosure, "translucent" means that an average transmittance in a visible light region (wavelength from 400 nm to 700 nm) measured in accordance with JIS K 7375 is less than 80%, and may be desirably 75% or less, and may be 10% or greater, or 20% or greater, and is intended to mean that an underlying layer is not completely hidden.

A laminate of the present disclosure will be described with reference to the drawings.

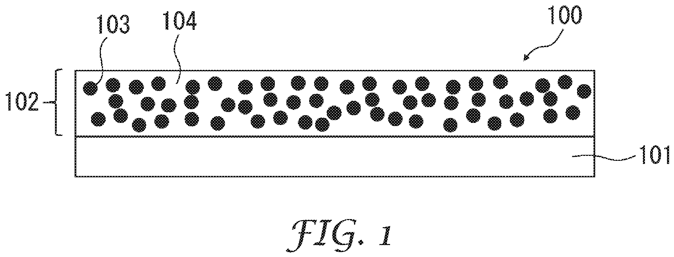

FIG. 1 is a cross-sectional view related to a laminate 100 according to an embodiment of the present disclosure. The laminate 100 of FIG. 1 includes a substrate 101 and a wear-resistant layer 102, the wear-resistant layer 102 contains inorganic nanoparticles 103 and a binder resin 104 obtained by curing at least one selected from the group consisting of a radiation-curable polymerizable oligomer and a radiation-curable polymerizable monomer.

To exemplify representative embodiments of the present disclosure, details of the structural components are described below with some of the reference signs being omitted.

The laminate of the present disclosure has a wear-resistant layer prepared from a radiation-curable ink having ow viscosity containing inorganic nanoparticles, a compound represented by Formula (1) below, and at least one selected from the group consisting of a radiation-curable polymerizable oligomer and a radiation-curable polymerizable monomer.

For example, an inkjet printing method typically applies an inkjet ink to a substrate by discharging the ink from a discharging nozzle, and examples of required performances of the ink include being an ink having low viscosity, having a little foreign substance content and thus being less likely to cause clogging. In the case where inorganic nanoparticles are simply contained in an ink, typically, the viscosity tends to be high, that is, opposite of the required performances, and conditions occur, for example, in which a discharging nozzle tends to be clogged as the nanoparticles aggregate. In such circumstances, the present inventors found that, by using the inorganic nanoparticles and the compound represented by Formula (1) described below in combination, aggregation and unification of the inorganic nanoparticles in the ink can be reduced or suppressed, and the viscosity of the ink can be set to such a degree of low viscosity that enables printing or coating by, for example, an inkjet printing method, a gravure coating method, or a bar coating method.

The inorganic nanoparticles to be used are not particularly limited. For example, at least one type of particles selected from the group consisting of silica, alumina, titanium oxide, zinc oxide, zirconium oxide, tin-doped indium oxide, cesium tungstate, and antimony-doped tin oxide can be used. Among these, for example, from the perspectives of interaction with the compound represented by Formula (1) or the non-functional silane coupling agent contained in the ink and wear resistance, silica nanoparticles are preferred. Here, in the present disclosure, "inorganic nanoparticles" do not include, for example, inorganic pigments that are used in inkjet inks, such as carbon black.

As silica nanoparticles, for example, a silica sol obtained by using water glass (sodium silicate solution) as a starting material can be used. For example, in the case where a dispersion liquid, in which silica nanoparticles are dispersed in, for example, isopropanol, is used as a starting material, from the perspective of reducing or preventing problems of the ink, such as gelling, the dispersion liquid of the starting material preferably contains a trace amount of or no acid components, alkali components, and ion components, especially ammonia, acetic acid, hydrochloric acid, sodium ion, potassium ion, and calcium ion. Thus, the content of acid components, alkali components, and ion components, especially ammonia, acetic acid, hydrochloric acid, sodium ion, potassium ion, and calcium ion, in the ink prepared by using the dispersion liquid or in the wear-resistant layer formed by the ink is preferably 500 ppm or less, 300 ppm or less, 100 ppm or less, 10 ppm or less, or 1 ppm or less, relative to a solid total weight of the ink or relative to a total weight (dry coating amount) of the wear-resistant layer, and more preferably these components are not contained.

From the perspective of reducing or preventing increase of viscosity or gelling of the ink, the silica nanoparticles in the dispersion liquid being unmodified particles, in which the surface is not modified by a surface treatment agent, such as silane, amine, carboxylic acid, sulfonic acid, phosphonic acid, and titanate, is advantageous and, as the dispersion liquid, use of isopropanol is advantageous. For the dispersion liquid containing the unmodified silica nanoparticles having acid components, alkali components, and ion components within the range described above, a commercially available product can be used, and examples thereof include IPA-ST-ZL (available from Nissan Chemical Industries, Ltd.).

The compounded amount of the inorganic nanoparticles is not particularly limited and, for example, can be appropriately adjusted based on the viscosity of the ink and the wear resistance performance depending on the usage. The compounded amount of the inorganic nanoparticles can be 10 mass% or greater, 15 mass% or greater, or 20 mass% or greater, and 40 mass% or less, 35 mass% or less, or 30 mass% or less, relative to the total weight (dry coating amount) of the wear-resistant layer or the total weight (solid content) of the ink.

The average particle size of the inorganic nanoparticles is not particularly limited and, for example, can be 30 nm or greater, 35 nm or greater, 40 nm or greater, 45 nm or greater, 50 nm or greater, 55 nm or greater, or 60 nm or greater, and 400 nm or less, 300 nm or less, 200 nm or less, 180 nm or less, 160 nm or less, 150 nm or less, 120 nm or less, or 100 nm or less, from the perspective of wear resistance. The average particle size of the inorganic nanoparticles is an average value of diameters of 10 or more particles, for example, from 10 to 100 particles, measured using a transmission electron microscope (TEM).

Because the radiation-curable ink of the present disclosure contains the compound represented by Formula (1) below, the viscosity of the ink can be reduced, although the radiation-curable ink contains inorganic nanoparticles.

R¹-R²-Si(OR³)₃ Formula (1)

In Formula (I), R¹ is an acryloyl group or a methacryloyl group, R² is an alkylene group having from 5 to 12 carbon atoms, and R³ is an alkyl group having from 1 to 4 carbon atoms. From the perspective of achieving low viscosity, R¹ is preferably a methacryloyl group, R² is preferably an alkylene group having from 6 to 10 carbon atoms, and more preferably an alkylene group having from 8 to 10 carbon atoms, and R³ is preferably an alkyl group having from 1 to 3 carbon atoms, and more preferably an alkyl group having from 1 to 2 carbon atoms. Among these, as the compound represented by Formula (1), 8-(meth)acryloxyoctyltrimethoxysilane is particularly preferred. The compound represented by Formula (1) can be used alone or in combination of two or more.

Although the reason why the compound represented by Formula (1) is capable of reducing the viscosity of the ink is not known, it is conceived that this is affected by the fact that the chain length of R² is longer than that of a typical silane coupling agent. That is, by the R² moiety having a long chain length in the compound represented by Formula (1) bonded to the inorganic nanoparticles, it is conceived that fluidity of the particle is enhanced because it becomes difficult for the particles to come close to each other, and thus the viscosity of the ink can be reduced.

The compounded amount of the compound represented by Formula (1) is not particularly limited. The compound is one type of silane coupling agents; however, unlike a typical silane coupling agent, the compound is not used for, for example, enhancement of adhesion to a substrate and is used to achieve low viscosity. Therefore, the used amount of the compound can be a smaller amount than a used amount of a typical silane coupling agent. For example, from the perspective of achieving low viscosity, the compounded amount of the compound represented by Formula (1) can be 0.030 mmol or greater, 0.040 mmol or greater, or 0.050 mmol or greater, and 0.090 mmol or less, 0.080 mmol or less, 0.070 mmol or less, per 1 g of the inorganic nanoparticles.

The radiation-curable ink of the present disclosure can further contain a non-functional silane coupling agent. The non-functional silane coupling agent can contribute to achievement of low viscosity of the ink.

Because the compound represented by Formula (1) contains an acryloyl group or a methacryloyl group as R¹, for example, a crosslinking structure can be formed with the radiation-curable polymerizable oligomer and/or the radiation-curable polymerizable monomer in the ink by radiation, and although hardness or wear resistance of the wear-resistant layer can be thus enhanced, for example, elongation properties required in decorative films may be reduced. In the case where formation of the crosslinking structure is desirably reduced and elongation properties are desirably imparted while achievement of low viscosity of the ink is attempted, it is advantageous to use the compound represented by Formula (1) and the non-functional silane coupling agent in combination.

Such a non-functional silane coupling agent is not particularly limited, and examples thereof include n-propyltrimethoxysilane, isopropyltrimethoxysilane, n-butyltrimethoxysilane, isobutyltrimethoxysilane, n-pentyltrimethoxysilane, isopentyltrimethoxysilane, n-hexyltrimethoxysilane, isohexyltrimethoxysilane, n-heptyltrimethoxysilane, isoheptyltrimethoxysilane, n-octyltrimethoxysilane, and isooctyltrimethoxysilane. Among these, n-propyltrimethoxysilane, n-hexyltrimethoxysilane, and isooctyltrimethoxysilane are preferred, and isooctyltrimethoxysilane is more preferred. These may be used alone or in combination of two or more of them.

The compounded amount of the non-functional silane coupling agent is not particularly limited, but similarly to the compound represented by Formula (1), from the perspective of achieving low viscosity, the compounded amount can be 0.030 mmol or greater, 0.040 mmol or greater, or 0.050 mmol or greater, and 0.090 mmol or less, 0.080 mmol or less, 0.070 mmol or less, per 1 g of the inorganic nanoparticles.

In the case where the viscosity of the ink is reduced, typically, dilution is often performed by blending an organic or water-based solvent; however, for example, use of an organic solvent deteriorates work environment, and all solvents require drying after printing and tend to deteriorate, for example, productivity. In the case where the ink containing a large amount of a solvent is, for example, used for printing on a resin substrate by an inkjet printing method, the attached ink tends to wet-spread on the substrate surface, and thus the target printing performance may not be adequately exhibited. Meanwhile, in the case of an ink having a little solvent or no solvent, the attached ink is less likely to wet-spread on a resin surface, thus excellent printing performance can be exhibited and, for example, three-dimensional protrusions and recesses corresponding to texture with a genuine feel or a design of, for example, a decorative film, can be imparted to a substrate surface. Since the radiation-curable ink of the present disclosure can achieve low viscosity by using the particular compound represented by Formula (1) and an optional non-functional silane coupling agent described above, the content of the solvent can be 5 mass% or less, 3 mass% or less, or 1 mass% or less, relative to the total amount of the ink, or no solvent may be contained.

The radiation-curable ink of the present disclosure containing at least one selected from the group consisting of a radiation-curable polymerizable oligomer and a radiation-curable polymerizable monomer.

In one embodiment, for example, from the perspectives of compatibility with the compound represented by Formula (1) and curing reactivity, it is advantageous for the radiation-curable ink to be a radical polymerizable (meth)acrylic ink employing a (meth)acrylic radiation-curable polymerizable oligomer and radiation-curable polymerizable monomer. The wear-resistant layer formed by using a (meth)acrylic ink has, for example, excellent transparency, strength, and weather resistance and is advantageous in the case where the laminate is used as an interior material of a decorative film.

In one embodiment, the radiation-curable ink contains a bifunctional urethane (meth)acrylate oligomer, which is a radiation-curable polymerizable oligomer, and optionally also contains a radiation-curable monofunctional monomer that can also function as a diluent. For example, with the inkjet printing method, purging with nitrogen is difficult due to the structure of the device and, typically, the ink is radiation cured in an air atmosphere. Compared to the polyfunctional monomer with tri- or higher-functionality, a bifunctional or monofunctional monomer or oligomer is typically easily affected by oxygen inhibition and is less likely to be cured in an air atmosphere. However, the ink containing a bifunctional urethane (meth)acrylate oligomer is easily cured even in an air atmosphere, and the cured binder resin component achieves, for example, excellent elongation properties and, for example, is advantageously used in an interior material of a decorative film of a laminate.

The bifunctional urethane (meth)acrylate oligomer is formed by introducing (meth)acryloyl groups into the both terminals of a urethane oligomer, which is a reaction product of diol and diisocyanate, and the (meth)acryloyl group reacts with another bifunctional urethane (meth)acrylate oligomer and a (meth)acryloyl group of the compound represented by Formula (1) or a monofunctional monomer, and thus a cured product is formed. The bifunctional urethane (meth)acrylate oligomer can impart flexibility, impact resistance at a low temperature of approximately from 0 to 10°C (also simply referred to as "low temperature impact resistance") and chemical resistance to a cured product of the radiation-curable ink. One type of or a combination of two or more types of the bifunctional urethane (meth)acrylate oligomer may be used. For each of the diols and diisocyanates constituting the urethane oligomer, one type of or a combination of two or more types thereof may be used.

Examples of the diol include polyester polyols, polyether polyols, polycarbonate polyols, and polycaprolactone polyols.

The diol may contain a low molecular weight diol. Examples of the low molecular weight diol include ethylene glycol, diethylene glycol, propylene glycol, dipropylene glycol, 1,3-butane diol, 1,4-butane diol, 2-methyl-1,3-propane diol, 1,5-pentane diol, 1,6-hexane diol, neopentyl glycol, 1,4-cyclohexanedimethanol, bisphenol A, bisphenol F, hydrogenated bisphenol A, hydrogenated bisphenol F, 1,2-cyclopentane diol, and tricyclo[5.2.1.0^{2,6}]decanedimethanol.

Examples of the diisocyanate include aliphatic isocyanates and aromatic isocyanates. Examples of the aliphatic isocyanate include tetramethylene diisocyanate, hexamethylene diisocyanate, 2,4,4-trimethylhexamethylene diisocyanate, 2,2,4-trimethylhexamethylene diisocyanate, decamethylene diisocyanate, 1,3-cyclohexane diisocyanate, 1,4-cyclohexane diisocyanate, isophorone diisocyanate, and 4,4'-methylene bis(cyclohexylisocyanate). Examples of the aromatic isocyanate include 2,4-toluene diisocyanate, 2,6-toluene diisocyanate, methylenediphenyl 4,4'-diisocyanate, 1,3-phenylene diisocyanate, 1,4-phenylene diisocyanate, 3,3'-dimethyldiphenylmethane-4,4'-diisocyanate, diphenylmethane-2,2'-diisocyanate, diphenylmethane-2,4'-diisocyanate, 4,4'-diisocyanato-3,3'-dimethylbiphenyl, 1,5-naphthalene diisocyanate, and 2-methyl-1,5-naphthalene diisocyanate.

By making both the diol and the diisocyanate into the aliphatic compound, weather resistance of a cured product of the radiation-curable ink and a wear-resistant layer containing the cured product can be enhanced.

The introduction of the (meth)acryloyl group can be performed by allowing a hydroxy group-containing (meth)acrylate to react with an isocyanato terminal of a urethane oligomer. Examples of the hydroxy group-containing (meth)acrylate include 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, dipropylene glycol monoacrylate, and dipropylene glycol monomethacrylate. The hydroxy group-containing (meth)acrylate can be used alone or in combination of two or more. In this embodiment, during synthesis of the urethane oligomer, an excessive amount of the diisocyanate is desirably used for the diol, that is, the molar ratio of NCO group/OH group is desirably greater than 1.

The introduction of the (meth)acryloyl group can be also performed by reacting an isocyanato group-containing (meth)acrylate to a hydroxy group terminal of a urethane oligomer. Examples of the isocyanato group-containing (meth)acrylate include 2-isocyanatoethyl acrylate and 2-isocyanatoethyl methacrylate. In this embodiment, during synthesis of the urethane oligomer, an excessive amount of the diol is desirably used for the diisocyanate, that is, the molar ratio of NCO group/OH group is desirably less than 1.

Examples of the bifunctional urethane (meth)acrylate oligomer include polyester urethane di(meth)acrylate oligomer, polycarbonate urethane di(meth)acrylate oligomer, and polyether urethane di(meth)acrylate oligomer.

For example, from the perspective of curability in an air atmosphere and elongation properties, it is advantageous for the bifunctional urethane (meth)acrylate oligomer to be a bifunctional aliphatic urethane acrylate oligomer. The bifunctional aliphatic urethane acrylate oligomer can provide a cured product having excellent weather resistance and a wear-resistant layer containing such a cured product.

The number average molecular weight Mn of the bifunctional urethane (meth)acrylate oligomer can be 500 or greater, 1000 or greater, or 1200 or greater, and 5000 or less, 4000 or less, or 3000 or less. The weight average molecular weight Mw of the bifunctional urethane (meth)acrylate oligomer can be 500 or greater, 1000 or greater, or 1200 or greater, and 5000 or less, 4000 or less, or 3000 or less. The number average molecular weight Mn and the weight average molecular weight Mw are values obtained by gel permeation chromatography, calibrated with polystyrene standard.

The radiation-curable ink desirably contains 20 parts by mass or greater, 25 parts by mass or greater, or 30 parts by mass or greater of the bifunctional urethane (meth)acrylate oligomer relative to 100 parts by mass of the radiation-curable component. By setting the content of the bifunctional urethane (meth)acrylate oligomer to 20 parts by mass or greater relative to 100 parts by mass of the radiation-curable component, flexibility, low temperature impact resistance, and chemical resistance of a cured product of the radiation-curable ink can be further enhanced. The radiation-curable ink desirably contains 50 parts by mass or less, 45 parts by mass or less, or 40 parts by mass or less of the bifunctional urethane (meth)acrylate oligomer relative to 100 parts by mass of the radiation-curable component. By setting the content of the bifunctional urethane (meth)acrylate oligomer to 50 parts by mass or less relative to 100 parts by mass of the radiation-curable component, excellent inkjet dischargeability or coatability can be achieved. Herein, in the present disclosure, "radiation-curable component" includes bifunctional urethane (meth)acrylate oligomers, other radiation-curable polymerizable monomers and radiation-curable polymerizable oligomers such as a monofunctional monomer having a dioxane moiety or a dioxolane moiety described below, and the compound represented by Formula (1).

In some embodiments, the radiation-curable ink can contain another radiation-curable polymerizable oligomer or monomer and, for example, can contain a monofunctional monomer having a dioxane moiety or a dioxolane moiety. Such other radiation-curable polymerizable oligomer and monomer can be used alone or in combination of two or more.

The monofunctional monomer having a dioxane moiety or a dioxolane moiety has at least one of a dioxane moiety and a dioxolane moiety in the molecule and is a compound having only one reactive functional group. In the case where a combination of the monofunctional monomer having a dioxane moiety or a dioxolane moiety and a bifunctional urethane (meth)acrylate oligomer is used, low temperature impact resistance of a cured product and a wear-resistant layer containing the cured product can be enhanced. Examples of the reactive functional group include a (meth)acryloyl group, a (meth)acrylamide group, and a vinyl group. Due to high reactivity with the bifunctional urethane (meth)acrylate oligomer, it is advantageous for the monofunctional monomer having a dioxane moiety or a dioxolane moiety to have a (meth)acryloyl group, especially an acryloyl group. One type of or a combination of two or more types of the monofunctional monomers each having a dioxane moiety or a dioxolane moiety may be used.

Examples of the monofunctional monomer having a dioxane moiety or a dioxolane moiety include monofunctional monomers having a dioxane moiety, such as (5-ethyl-1,3-dioxan-5 - yl)methyl (meth)acrylate (also referred to as "cyclic trimethylolpropane formal acrylate"), (2-methyl-5-ethyl-1,3-dioxan-5-yl)methyl (meth)acrylate, (2,2-dimethyl-5-ethyl-1,3-dioxan-5-yl)methyl (meth)acrylate, (2-methyl-2,5-diethyl-1,3-dioxan-5-yl)methyl (meth)acrylate, (2,2,5-triethyl-1,3-dioxan-5-yl)methyl (meth)acrylate, (2,5-diethyl-1,3-dioxan-5-yl)methyl (meth)acrylate, and polyethylene glycol (meth)acrylate having a 1,3-dioxane ring; and monofunctional monomers having a dioxolane moiety, such as (2-methyl-2-ethyl-1,3-dioxolan-4-yl)methyl (meth)acrylate, (2-cyclohexyl-1,3-dioxolan-4-yl)methyl (meth)acrylate, (2,2-dimethyl-1,3-dioxolan-4-yl)methyl (meth)acrylate, (2-methyl-2-isobutyl-1,3-dioxolan-4-yl)methyl (meth)acrylate, (2-methyl-2-acetonyl-1,3-dioxolan-4-yl)methyl (meth)acrylate, (2-oxo-1,3-dioxolan-4-yl)methyl (meth)acrylate, 2-(2-oxo-1,3-dioxolan-4-yl)ethyl (meth)acrylate, and 3-(2-oxo-1,3-dioxolan-4-yl)propyl (meth)acrylate.

The monofunctional monomer having a dioxane moiety or a dioxolane moiety is desirably (5-ethyl-1,3-dioxan-5-yl)methyl (meth)acrylate or (2-methyl-2-ethyl-1,3-dioxolan-4-yl)methyl (meth)acrylate; from the perspective of high reactivity with a bifunctional urethane (meth)acrylate oligomer, is more desirably (5-ethyl-1,3-dioxan-5-yl)methyl acrylate or (2-methyl-2-ethyl-1,3-dioxolan-4-yl)methyl acrylate; from the perspective of imparting excellent low temperature impact resistance to a cured product, is particularly desirably (2-methyl-2-ethyl-1,3-dioxolan-4-yl)methyl acrylate.

The radiation-curable ink desirably contains 10 parts by mass or greater, 20 parts by mass or greater, or 30 parts by mass or greater and desirably contains 80 parts by mass or less, 70 parts by mass or less, or 50 parts by mass or less, of the monofunctional monomer having a dioxane moiety or a dioxolane moiety relative to 100 parts by mass of the radiation-curable component. By setting the content of the monofunctional monomer having a dioxane moiety or a dioxolane moiety to 10 parts by mass or greater relative to 100 parts by mass of the radiation-curable component, excellent low temperature impact resistance can be achieved. By setting the content of the monofunctional monomer having a dioxane moiety or a dioxolane moiety to 80 parts by mass or less relative to 100 parts by mass of the radiation-curable component, excellent weather resistance can be achieved.

In some embodiments, the radiation-curable ink may contain another radiation-curable polymerizable monomer. Examples of another radiation-curable polymerizable monomer include chain-like alkyl (meth)acrylates, such as methyl (meth)acrylate, ethyl (meth)acrylate, n-butyl (meth)acrylate, isoamyl (meth)acrylate, 2-methylbutyl (meth)acrylate, n-hexyl (meth)acrylate, 2-ethylhexyl (meth)acrylate, n-octyl (meth)acrylate, isooctyl (meth)acrylate, isononyl (meth)acrylate, decyl (meth)acrylate, and dodecyl (meth)acrylate; alicyclic (meth)acrylates, such as cyclohexyl (meth)acrylate, trimethylcyclohexyl (meth)acrylate, and isobornyl (meth)acrylate; phenoxyalkyl (meth)acrylates, such as phenoxyethyl (meth)acrylate; alkoxy alkyl (meth)acrylates, such as methoxypropyl (meth)acrylate, 2-methoxybutyl (meth)acrylate, and 2-(2-ethoxyethoxy)ethyl (meth)acrylate; cyclic ether-containing (meth)acrylates, such as glycidyl (meth)acrylate and tetrahydrofurfuryl (meth)acrylate; hydroxy group-containing (meth)acrylates, such as 2-hydroxyethyl (meth)acrylate, 2-hydroxypropyl (meth)acrylate, and 4-hydroxybutyl (meth)acrylate; nitrogen-containing (meth)acryloyl compounds, such as (meth)acrylamide and N,N-diethyl (meth)acrylamide; and monofunctional monomers, such as (meth)acrylic acid. Examples of another radiation-curable polymerizable monomer include monofunctional monomers including vinyl compounds, such as vinyl acetate, vinyl propionate, styrene, and vinyl toluene; unsaturated nitriles, such as acrylonitrile and methacrylonitrile; unsaturated carboxylic acids, such as crotonic acid, itaconic acid, fumaric acid, citraconic acid, and maleic acid. Among these, from the perspectives of achieving low viscosity of the ink and storage stability, n-octyl (meth)acrylate and trimethylcyclohexyl (meth)acrylate are preferred, and a combined use of these is more preferred.

Another radiation-curable polymerizable monomer may be a polyfunctional monomer. A polyfunctional monomer can enhance strength and durability of a cured product by functioning as a crosslinking agent. Crosslinking by using a polyfunctional monomer may enhance adhesion between a wear-resistant layer containing a cured product and another layer on a substrate or a wear-resistant layer. From the perspectives of elongation properties and impact resistance, the content of the polyfunctional monomer is 5 parts by mass or less, or preferably 3 parts by mass or less, relative to 100 parts by mass of the radiation-curable component.

Examples of the polyfunctional monomer include bifunctional (meth)acrylates, such as 1,4-butane diol di(meth)acrylate, 1,6-hexane diol di(meth)acrylate, ethylene glycol di(meth)acrylate, cyclohexane dimethanol di(meth)acrylate, diethylene glycol di(meth)acrylate, dipropylene glycol di(meth)acrylate, and polyethylene glycol di(meth)acrylate; trifunctional (meth)acrylates, such as glycerol tri(meth)acrylate, trimethylolpropane tri(meth)acrylate, and pentaerythritol tri(meth)acrylate; (meth)acrylates having 4 or more functional groups, such as ditrimethylolpropane tetra(meth)acrylate, dipentaerythritol penta(meth)acrylate, and pentaerythritol tetra(meth)acrylate.

For example, because reactivity with a bifunctional urethane (meth)acrylate oligomer and any monofunctional monomer having a dioxane moiety or a dioxolane moiety is high and a cured product having excellent adhesion to another material, such as a substrate layer and a decorative layer, is formed, it is advantageous for such another radiation-curable polymerizable monomer to have a (meth)acryloyl group, especially an acryloyl group.

In some embodiments, the radiation-curable ink contains no such other radiation-curable polymerizable monomer containing a monofunctional monomer and a polyfunctional monomer described above or can contain greater than 0 parts by mass, 10 parts by mass or greater, or 20 parts by mass or greater, and 70 parts by mass or less, 60 parts by mass or less, or 50 parts by mass or less, of the radiation-curable polymerizable monomer relative to 100 parts of the radiation-curable component.

As another radiation-curable polymerizable oligomer, besides the bifunctional urethane (meth)acrylate oligomer, for example, polyester (meth)acrylate and epoxy (meth)acrylate can be used. These radiation-curable polymerizable oligomers may be monofunctional or polyfunctional.

In some embodiments, the radiation-curable ink contains no such other radiation-curable polymerizable oligomer or can contain greater than 0 parts by mass, 5 parts by mass or greater, or 10 parts by mass or greater, and 50 parts by mass or less, 40 parts by mass or less, or 30 parts by mass or less, of the radiation-curable polymerizable oligomer relative to 100 parts of the radiation-curable component.

In some embodiments, the total content of other radiation-curable polyfunctional monomer and the radiation-curable polyfunctional oligomer in the radiation-curable ink can be 30 parts by mass or less, 20 parts by mass or less, 10 parts by mass or less, 5 parts by mass or less, 3 parts by mass or less, or 1 part by mass or less, relative to 100 parts by mass of the radiation-curable component, or none of these polyfunctional monomer and the polyfunctional oligomer may be contained in the ink. By using no polyfunctional monomer and polyfunctional oligomer or by setting the total content described above to 10 parts by mass or less, flexibility or elongation properties of a cured product can be enhanced.

As a photopolymerization initiator, for example, a known compound that causes a radical polymerization reaction can be used. As the photopolymerization initiator, any of intramolecular cleavage type and hydrogen transfer type can be used. Examples of the photopolymerization initiator include 1-hydroxycyclohexyl phenyl ketone, 2,2-dimethoxy-2-phenylacetophenone, 2-methyl-1- [4-(methylthio)phenyl] -2-morpholinopropan-1-one, 2-hydroxy-2-methyl-1-phenylpropan-1-one, 2-benzyl-2-dimethylamino-1-(4-morpholinophenyl)-butan-1-one, 1-[4-(2-hydroxyethoxy)-phenyl]-2-hydroxy-2-methyl-1-propan-1-one, 2,4,6-trimethylbenzoyldiphenylphosphine oxide, 2,6-dimethylbenzoyldiphenylphosphine oxide, benzoyldiethoxyphosphine oxide, bis(2,6-dimethoxybenzoyl)-2,4,4-trimethylpentylphosphine oxide, benzoin alkyl ether (e.g. benzoin methyl ether, benzoin ethyl ether, benzoin isopropyl ether, benzoin isobutyl ether, and n-butyl benzoin ether), methylbenzoyl formate, 1-(4-isopropylphenyl)-2-hydroxy-2-methylpropan-1-one, 2-hydroxy-2-methyl-1-phenylpropan-1-one, p-tert-butyltrichloroacetophenone, p-tert-butyldichloroacetophenone, benzyl, acetophenone, thioxanthone compounds, (2-chlorothioxanthone, 2-methylthioxanthone, 2,4-diethylthioxanthone, 2,4-diisopropylthioxanthone), camphorquinone, 3-ketocoumarin, anthraquinone compounds (e.g. anthraquinone, 2-ethylanthoraquinone, α-chloroanthraquinone, and 2-tert-butylanthraquinone), acenaphthene, 4,4'-dimethoxybenzyl, and 4,4'-dichlorobenzyl. The photopolymerization initiator can be used alone or in combination of two or more.

In some embodiments, the radiation-curable ink can contain 1 part by mass or greater, or 2 parts by mass or greater, and 20 parts by mass or less, or 15 parts by mass or less, of the photopolymerization initiator relative to 100 parts by mass of the radiation-curable component.

The radiation-curable ink may contain additives, such as photostabilizers, polymerization inhibitors, UV absorbing agents, antifoaming agents, antifouling agents, surface conditioners, fillers, pigments, and dyes, as optional components.

The radiation-curable ink may contain a dispersing agent, such as a wetting dispersing agent; however, use of a dispersing agent may reduce properties, such as surface strength and wear resistance, of a wear-resistant layer prepared from the ink. Therefore, from the perspective of enhancing these properties, the content of the dispersing agent is preferably 20 parts by mass or less, 15 parts by mass or less, 10 parts by mass or less, 5 parts by mass or less, or 1 part by mass or less, relative to 100 parts by mass of the inorganic nanoparticles in the radiation-curable ink or the wear-resistant layer, and particularly preferably no dispersing agent is contained. Note that, in the examples described below, a configuration in which a wetting dispersing agent is not contained is described. It can be said that the wear-resistant layer of an example which uses no dispersing agent exhibits excellent surface strength and wear resistance compared to those of a wear-resistant layer containing a dispersing agent.

The initial viscosity of the radiation-curable ink is 18.0 mPa·s or less, 17.0 mPa s or less, 16.0 mPa s or less, 15.0 mPa·s or less, 14.0 mPa·s or less, 13.0 mPa s or less, or 12.0 mPa·s or less, at 55°C from the perspectives of dischargeability from an inkjet nozzle and coatability. The lower limit of the initial viscosity is not particularly limited but can be, for example, 1.0 mPa s or greater, 3.0 mPa s or greater, or 5.0 mPa s or greater, from the perspective of printing suitability.

In some embodiments, the radiation-curable ink of the present disclosure has excellent storage stability at high temperatures. The storage stability can be indirectly evaluated by a viscosity at 55°C after 1 week of storage of the ink at 60°C. The radiation-curable ink of an embodiment of the present disclosure can achieve the viscosity at 55°C after 1 week of storage of the ink at 60°C of 18.0 mPa s or less, 17.0 mPa s or less, 16.0 mPa·s s or less, 15.0 mPa·s or less, 14.0 mPa·s s or less, 13.0 mPa·s s or less, or 12.0 mPa·s s or less. The lower limit of the viscosity is not particularly limited but can be, for example, 1.0 mPa·s or greater, 3.0 mPa·s or greater, or 5.0 mPa·s or greater.

The wear-resistant layer can be formed by applying the radiation-curable ink directly on a substrate or applying the radiation-curable ink on a substrate with another layer interposed between the radiation-curable ink and the substrate by various printing methods or coating methods that require use of a low-viscosity ink, and then curing by UV radiation, electron beam, or other radiation. In general, while an ink having a high viscosity easily reduces of suppresses aggregation or unification of inorganic particles, an ink having low viscosity have difficulty of reducing or suppressing aggregation or unification of inorganic particles. The radiation-curable ink of the present disclosure can reduce or suppress aggregation and unification of inorganic nanoparticles while having low viscosity, the radiation-curable ink can be used for various printing methods or coating methods that require use of a low-viscosity ink, such as an inkjet printing method, a gravure coating method, a bar coating method, a knife coating method, a capillary coating method, a spray coating method, and a three-dimensional printing method by optical shaping (also referred to as "additive manufacturing method"). Among these, the radiation-curable ink of the present disclosure can be suitably used for an inkjet printing method, which can be easily affected by aggregated substances. The wear-resistant layer prepared by such a method can be, for example, differentiated from an inkjet printing wear-resistant layer or a gravure coating wear-resistant layer.

The radiation-curable ink can be printed on at least a part of a substrate or may be printed on the entire substrate. The wear-resistant layer may have a substantially flat surface or may have a protruded-recessed form, such as an embossed pattern, on the surface. The wear-resistant layer of the present disclosure has excellent wear resistance and may function as a protection layer for reducing or preventing, for example, scratching from an outside.

The thickness of the wear-resistant layer is not particularly limited and can be appropriately adjusted depending on, for example, required wear resistance and design. For example, the thickness of the wear-resistant layer may be, at least partially, 7 µm or greater, 20 µm or greater, or 30 µm or greater. By allowing the wear-resistant layer to have a part having a thickness of 7 µm or greater, for example, in the case where a laminate having a wear-resistant layer having protrusions and recesses is used as a decorative film, three-dimensional protrusions and recesses corresponding to texture with a genuine feel or a design of the decorative film can be imparted to a surface of the decorative film.

In some embodiments, the maximum thickness of the wear-resistant layer can be, for example, 500 µm or less, 300 µm or less, or 100 µm or less. By setting the maximum thickness of the wear-resistant layer to 500 µm or less, suitable flexibility, such as elongation properties and bending properties, of the wear-resistant layer can be achieved.

The thickness of the wear-resistant layer can be appropriately adjusted by, for example, printing or coating the radiation-curable ink multiple times locally or in its entirety. Note that the thickness of each layer in the laminate of the present disclosure can be defined as an average value of thicknesses of selected at least 5 points in a target layer, such as a wear-resistant layer, of the laminate structure obtained by measuring a thickness direction cross section of the laminate structure using a scanning electron microscope (SEM).

In some embodiments, the maximum roughness Rz of the wear-resistant layer can be 0.5 µm or greater, 1 µm or greater, or 1.5 µm or greater, and 20 µm or less, 15 µm or less, or 10 µm or less. By setting the maximum roughness Rz of the wear-resistant layer into the range described above, in the case where a laminate having a wear-resistant layer having protrusions and recesses is used as a decorative film, three-dimensional protrusions and recesses corresponding to texture with a genuine feel or a design of the decorative film can be imparted to a surface of the decorative film. Here, the maximum roughness Rz of the wear-resistant layer is decided in accordance with JIS B 0601:2013 (corresponding to ISO 4287:1997).

The wear-resistant layer may be transparent, translucent, or opaque in visible range in its entirety or partially to provide a target appearance.

The substrate constituting the laminate of the present disclosure can be used as, for example, a support of the wear-resistant layer. The surface of the substrate may be subjected to surface treatment, such as corona treatment or plasma treatment.

The material of the substrate is not particularly limited, and examples thereof include various resin materials, such as polyvinyl chloride resins, polyurethane resins, polyolefin resins such as polyethylene (PE) and polypropylene (PP), polyester resins such as polyethylene terephthalate (PET) and polyethylene naphthalate (PEN), polycarbonate resins, polyimide resins, polyamide resins, (meth)acrylic resins such as polymethyl methacrylate (PMMA), and fluororesins, as well as copolymers, such as ethylene-vinylacetate copolymers (EVA), ethylene-acrylic acid copolymers, ethylene-ethyl acrylate copolymers, ethylene-vinylacetate copolymers, acrylonitrile-butadiene rubber (NBR), and acrylonitrile-butadiene-styrene copolymers (ABS). These may be used alone or in combination of two or more of them. As the substrate, an inorganic substrate such as glass or a metal substrate such as aluminum can be used.

The shape or configuration of the substrate is not particularly limited and may be, for example, a film shape, a plate shape, a curved surface shape, an odd shape, or a three-dimensional shape, or may be a single-layer configuration, a laminate configuration, or a composite configuration, such as those formed of a combination of a plurality of substrates having different shapes.

The substrate may be colored or colorless. The substrate may be opaque, translucent, or transparent. The substrate may have a substantially smooth surface or may have a structured surface that can be formed by surface processing such as embossing.

The thickness of the substrate can be, for example, 50 µm or greater, 80 µm or greater, or 100 µm or greater. The upper limit of the thickness is not particularly limited but can be, for example, 500 µm or less, 300 µm or less, or 200 µm or less, from the perspectives of followability and production cost, for example.

In some embodiments, the laminate of the present disclosure can further have, for example, at least one selected from the group consisting of a decorative layer, a brightening layer, a bonding layer, an adhesive layer, and a release liner, depending on the use thereof. In the present disclosure, for example, a laminate having a colored substrate and/or a wear-resistant layer or a laminate having a decorative layer and/or a brightening layer may be referred to as a decorative film.

In the laminate of the present disclosure, a decorative layer can be, for example, arranged on or below a substrate. The decorative layer can be, for example, applied to an entire surface or a portion of the substrate.

Examples of the decorative layer include, but are not limited to: a color layer that exhibits a paint color, for example a light color such as white and yellow, or a dark color such as red, brown, green, blue, gray, and black; a pattern layer that imparts to an article a pattern, a logo, a design or the like such as a wood grain tone, a stone grain tone, a geometric pattern, and a leather pattern; a relief (embossed carving pattern) layer provided with an protruded and recessed shape on a surface; and combinations thereof.

As a material of the color layer, for example, a material in which a pigment such as an inorganic pigment such as carbon black, yellow lead, yellow iron oxide, Bengala, or red iron oxide; a phthalocyanine pigment such as phthalocyanine blue or phthalocyanine green; and an organic pigment such as an azo lake pigment, an indigo pigment, a perinone pigment, a perylene pigment, a quinophthalone pigment, a dioxazine pigment, and a quinacridone pigment such as quinacridone red is dispersed in a binder resin such as a (meth)acrylic resin or a polyurethane resin can be used. However, the material of the color layer is not limited thereto.

Such a material may be used to form the color layer by, for example, a coating method such as gravure coating, roll coating, die coating, bar coating, and knife coating, or a printing method such as inkjet printing.

As a pattern layer, a pattern layer obtained by, for example, directly applying a pattern, a logo, a design, or other such patterns to the substrate or the like by using a printing method such as gravure direct printing, gravure offset printing, inkjet printing, laser printing, or screen printing may be adopted, or a film, a sheet, or the like having a pattern, a logo, a design, or the like formed by coating such as gravure coating, roll coating, die coating, bar coating, and knife coating, or by punching, etching, or the like may also be used. However, the pattern layer is not limited thereto. For example, a material similar to the material used in the color layer may be used as the material of the pattern layer.

As a relief layer, a thermoplastic resin film having a concavo-convex shape on a surface obtained by a conventionally known method such as embossing, scratching, laser machining, dry etching, or hot pressing may be used. The relief layer can also be formed by coating a release liner having a concavo-convex shape with a thermosetting or radiation curable resin such as a curable (meth)acrylic resin, curing by heating or radiation irradiation, and removing the release liner.

The thermoplastic resin, the thermosetting resin, and the radiation curable resin used in the relief layer are not particularly limited and, for example, a fluororesin, PET, PEN, and other such polyester resins, a (meth)acrylic resin, polyethylene, polypropylene, and other such polyolefin resins, a thermoplastic elastomer, a polycarbonate resin, a polyamide resin, an ABS resin, an acrylonitrile-styrene resin, a polystyrene resin, a vinyl chloride resin, and a polyurethane resin may be used. The relief layer may include at least one of the pigments used in the color layer.

The thickness of the decorative layer can be appropriately adjusted depending on, for example, required decorative properties and concealing properties and is not limited to a particular thickness, and may be, for example, 1 µm or greater, 3 µm or greater, or 5 µm or greater, and may be 50 µm or less, 40 µm or less, 30 µm or less, 20 µm or less, or 15 µm or less.

The brightening layer is not limited to the following, but may be a layer that includes a metal selected from aluminum, nickel, gold, silver, copper, platinum, chromium, iron, tin, indium, titanium, lead, zinc, and germanium, or an alloy or a compound thereof, and that is formed by vacuum deposition, sputtering, ion plating, plating, or the like on an entire surface or a part of the substrate or the decorative layer. The thickness of the brightening layer may be selected arbitrarily according to the required decorative property, brightness and the like.

A bonding layer (may be referred to as a "primer layer" or the like) may be used to bond the layers constituting the laminate. As a bonding layer, for example, a commonly used (meth)acrylic-based, polyolefin-based, polyurethane-based, polyester-based, or rubber-based solvent type, emulsion type, pressure sensitive type, heat sensitive type, thermosetting type, or UV curing type adhesive may be used. The bonding layer may be applied by a known coating method or the like.

The thickness of the bonding layer may be, for example, 0.05 µm or greater, 0.5 µm or greater, or 5 µm or greater, and may be 100 µm or less, 50 µm or less, 20 µm or less, or 10 µm or less.

The laminate may further have an adhesive layer to adhere the laminate to an adherend. As a material of the adhesive layer, materials that are the same as that of the bonding layer may be used. The adhesive layer may be applied to an adherend instead of the laminate.

The thickness of the adhesive layer may be, but not limited to, for example, 5 µm or greater, 10 µm or greater, or 20 µm or greater, and may be 200 µm or less, 100 µm or less, or 80 µm or less.

The substrate, the decorative layer, the bonding layer, and the adhesive layer according to the present disclosure may include, as an optional component, for example, a filler, a reinforcing material, an antioxidant, a UV absorber, a light stabilizer, a thermal stabilizer, a tackifier, a dispersant, a plasticizer, a flow improving agent, a surfactant, a leveling agent, a silane coupling agent, a catalyst, a pigment, and a dye, within the range that does not inhibit the effects of the present disclosure and decorative properties.

Any suitable release liner may be used to protect the adhesive layer. Examples of a typical release liner include those prepared from paper (e.g., kraft paper), and from polymeric materials (e.g., polyolefin such as polyethylene or polypropylene, ethylene vinyl acetate, polyurethane, polyethylene terephthalate, and other such polyester). On the release liner, a layer of a release agent such as a silicone-containing material or a fluorocarbon-containing material may be applied as necessary.

The thickness of the release liner may be, for example, 5 µm or greater, 15 µm or greater, or 25 µm or greater, and may be 300 µm or less, 200 µm or less, or 150 µm or less. The thickness of the release liner can be defined as an average value calculated by, after the release liner is removed from the adhesive layer, measuring the thickness of selected portion of the release liner for at least five times by using High-Accuracy Digimatic Micrometer (MDH-25MB, available from Mitutoyo Corporation).

In the case where the laminate of the present disclosure is formed from a substrate and a wear-resistant layer, the wear-resistant layer may be prepared by various printing methods or coating methods that require use of a low-viscosity ink, such as an inkjet printing method, as described above. However, in the case where the laminate also has another optional layer, besides these printing methods or coating methods, the preparation can be appropriately performed by combining a plurality of publicly known methods, including printing methods such as gravure direct printing, gravure offset printing, and screen printing, and coating methods such as gravure coating, roll coating, die coating, bar coating, knife coating, and extrusion coating methods, lamination methods, and transfer methods.

The product form of the laminate of the present disclosure is not particularly limited and examples thereof include cut-sheet products such as sheets, laminate products in which a plurality of sheets are piled up, and roll products in which a sheet is wound in a roll form.

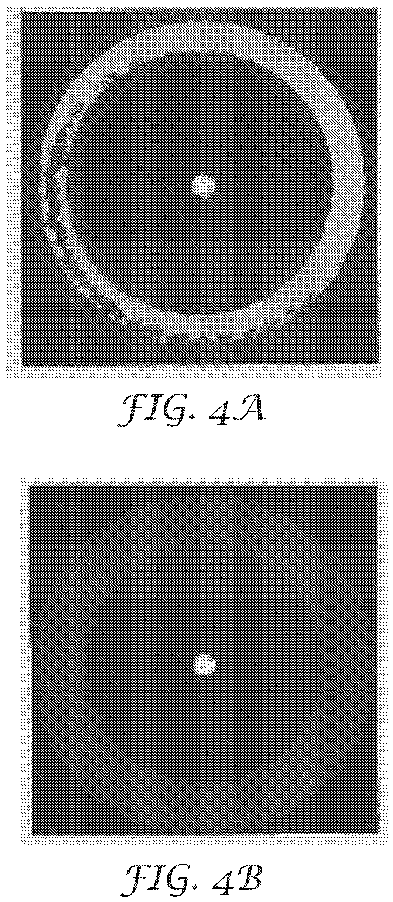

A laminate having the wear-resistant layer of the present disclosure can exhibit excellent wear resistance performance. The wear resistance performance can be evaluated by, for example, Taber abrasion test described below. The wear-resistant layer constituting the laminate of the present disclosure can ensure a state where no peeling has occurred after a 2000 time, 3000 time, 4000 time, 5000 time, or 5500 time Taber abrasion test. Note that "peeling of the wear-resistant layer" is intended to mean a condition where at least a part of the base is exposed as shown in FIG. 4A.

In some embodiments, the wear-resistant layer of the present disclosure can be stretched, and a laminate having this wear-resistant layer can exhibit excellent elongation properties. The elongation properties can be evaluated by, for example, a test for elongation at break described below. The wear-resistant layer of the laminate in some embodiments can exhibit 50% or greater, 70% or greater, 80% or greater, 85% or greater, or 90% or greater, of the elongation at break at 20°C. The upper limit of the elongation at break is not particularly limited and, for example, can be 200% or less, 180% or less, 160% or less, or 150% or less. "Break" refers to a case where the appearance change that is visually recognizable by eyes, such as crack or gloss change, on a surface of the wear-resistant layer occurs. The laminate having such elongation properties can be suitably used as, for example, a decorative film.

The application of the laminate of the present disclosure is not particularly limited. For example, the laminate of the present disclosure can be used for the decorative applications. For example, the laminate of the present disclosure can be used as an interior material for interior walls, stairs, windows, doors, floors, ceilings, columns, or partitions of building structures such as buildings, apartments, or houses, or an exterior material for outer walls, and can be used as various interior or exterior materials, such as interior or exterior materials for vehicles such as automobiles, trains, aircrafts, and ships. In addition, the laminate of the present disclosure can be used for electrical appliances such as PCs, smart phones, cellular phones, refrigerators, and air conditioners, stationery, furniture, tables, various containers such as cans, traffic signs, and signboards.

### Examples

Specific embodiments of the present disclosure will be exemplified in the following examples, but the present invention is not limited to these embodiments. All parts and percentages are based on mass unless otherwise specified.

Table 1 indicates materials, reagents and the like used in this example.

**Table 1**

| Trade name, model No., or abbreviation | Description | Source of supply |
|---|---|---|
| NALCO (trade name) 2329K | SiO₂ particle aqueous dispersion stabilized by Na ions; average particle size: 75 nm; solid content: 40.99 mass% | Nalco Company (USA) |
| SNOWTEX (trade name) ST-ZL | SiO₂ particle aqueous dispersion stabilized by Na ions; average particle size: 80 nm; solid content: 41.38 mass% | Nissan Chemical Industries, Ltd. (Chuo-ku, Tokyo, Japan) |
| MA-ST-L | SiO₂ particle dispersed in methanol; average particle size: 45 nm; solid content: 41.46 mass% | Nissan Chemical Industries, Ltd. (Chuo-ku, Tokyo, Japan) |
| IPA-ST-L | SiO₂ particle dispersed in isopropanol; average particle size: 45 nm; solid content: 31.14 mass% | Nissan Chemical Industries, Ltd. (Chuo-ku, Tokyo, Japan) |
| IPA-ST-ZL | SiO₂ particle dispersed in isopropanol; average particle size: 80 nm; solid content: 30.90 mass% | Nissan Chemical Industries, Ltd. (Chuo-ku, Tokyo, Japan) |
| KBM5803 | 8-Methacryloxyoctyltrimethoxysilane; solid content: 100 mass% | Shin-Etsu Chemical Co., Ltd. (Chiyoda-ku, Tokyo, Japan) |
| KBM3033 | n-Propyltriethoxysilane; solid content: 100 mass% | Shin-Etsu Chemical Co., Ltd. (Chiyoda-ku, Tokyo, Japan) |
| KBM3036 | Hexyltrimethoxysilane; solid content: 100 mass% | Shin-Etsu Chemical Co., Ltd. (Chiyoda-ku, Tokyo, Japan) |
| Isooctyltrimethoxysilane | Isooctyltrimethoxysilane; solid content: 100 mass% | Aldrich Chemical Company (USA) |
| 4-Hydroxy-TEMPO free radical | 4-Hydroxy-2,2,6,6-tetramethylpiperidine 1-oxyl free radical; solid content: 100 mass% | Aldrich Chemical Company (USA) |
| CN991NS | Bifunctional urethane acrylate oligomer; solid content: 100 mass% | Sartomer (USA) |
| SR420NS | Trimethylcyclohexyl acrylate; solid content: 100 mass% | Sartomer (USA) |
| Viscoat (trade name) 196 | Trimethylcyclohexyl acrylate; solid content: 100 mass% | Osaka Organic Chemical Industry Ltd. (Chuo-ku, Osaka, Japan) |
| MEDOL-10 | (2-Methyl-2-ethyl-1,3-dioxolan-4-yl)methyl acrylate; solid content: 100 mass% | Osaka Organic Chemical Industry Ltd. (Chuo-ku, Osaka, Japan) |
| NOAA | n-Octylacrylate; solid content: 100 mass% | Osaka Organic Chemical Industry Ltd. (Chuo-ku, Osaka, Japan) |
| Omnirad (trade name) 184 | Photopolymerization initiator: phenyl(1-hydroxycyclohexyl)methanone | GM Resins B. V. (Netherlands) |
| Genomer (trade name) 22 | Polymerization inhibitor | EVONIK INDUSTRIES (Germany) |
| Genorad (trade name) 22 | Polymerization inhibitor | EVONIK INDUSTRIES (Germany) |
| TEGO (trade name) Flow 425 | Polyether-modified polysiloxane | EVONIK INDUSTRIES (Germany) |
| MeOh | Methanol | FUJIFILM Wako Pure Chemical Corporation (Chuo-ku, Osaka-shi, Japan) |
| MEK | Methyl ethyl ketone | FUJIFILM Wako Pure Chemical Corporation (Chuo-ku, Osaka-shi, Japan) |
| MIPA | 1 -Methoxy-2-propanol | FUJIFILM Wako Pure Chemical Corporation (Chuo-ku, Osaka-shi, Japan) |
| IPA | 2-Propanol | FUJIFILM Wako Pure Chemical Corporation (Chuo-ku, Osaka-shi, Japan) |
| 3M (trade name) Scotchcal (trade name) Graphic film IJ180Cv3-10XR | Polyvinyl chloride film | 3M Japan Limited (Shinagawa-ku, Tokyo, Japan) |
| Viscoat (trade name) 190 | Ethyl carbitol acrylate | Osaka Organic Chemical Industry Ltd. (Chuo-ku, Osaka, Japan) |
| Viscoat (trade name) 192 | Phenoxyethyl acrylate | Osaka Organic Chemical Industry Ltd. (Chuo-ku, Osaka, Japan) |
| Chivacure (trade name) TPO | Photopolymerization initiator: 2,4,6-trimethylbenzoyldiphenylphosphine oxide | Chitec Technology Co., Ltd. (Taiwan) |
| BP | Benzophenone | Shuang-Bang Industrial. Corp. (Taiwan) |
| Lignostab (trade name) 1198 | Light stabilizer | BASF Japan Ltd. (Chuo-ku, Tokyo, Japan) |
| Irgastab (trade name) UV25 | Anti-gelling agent | BASF Japan Ltd. (Chuo-ku, Tokyo, Japan) |
| PBk7 | Black pigment | Cabot Corporation (USA) |

### Preparation of surface-modified silica sol

Using the raw materials shown in Table 2, surface-modified silica sols were prepared by the following methods.

### SM-1 sol

In a glass bottle containing 120 g ofMeOH, 0.588 g of KBM5803, 1.081 g of isooctyltrimethoxysilane, and 0.006 g of 4-hydroxy-TEMPO free radical were added. This mixture and 75 g of MEK were added in a glass bottle containing 150 g of NALCO (trade name) 2329K and agitated at room temperature for 10 minutes. This glass bottle was sealed and left in an oven at 80°C for 16 hours, and thus SM-1 sol was obtained. The solid content of the sol was 18.22 mass%.

### SM-2 sol

Into a glass bottle containing 112.5 g of MIPA, 0.395 g of KBM5803, 0.721 g of isooctyltrimethoxysilane, and 0.004 g of 4-hydroxy-TEMPO free radical were added. This mixture was added into a glass bottle containing 100 g of Snowtex (trade name) ST-ZL and agitated at room temperature for 10 minutes. This glass bottle was sealed and left in an oven at 80°C for 16 hours, and thus SM-2 sol was obtained. The solid content of the sol was 19.90 mass%.

### SM-3 sol

Into a glass bottle containing 10.0 g ofMeOH, 0.330 g of KBM5803, 0.607 g of isooctyltrimethoxysilane, and 0.003 g of 4-hydroxy-TEMPO free radical were added. This mixture was added into a glass bottle containing 50 g of MA-ST-L and agitated at room temperature for 10 minutes. This glass bottle was sealed and left in an oven at 60°C for 16 hours, and thus SM-3 sol was obtained. The solid content of the sol was 35.56 mass%.

### SM-4 sol

Into a glass bottle containing 20.0 g of IPA, 0.595 g of KBM5803, 1.095 g of isooctyltrimethoxysilane, and 0.006 g of 4-hydroxy-TEMPO free radical were added. This mixture was added into a glass bottle containing 100 g of IPA-ST-L and agitated at room temperature for 10 minutes. This glass bottle was sealed and left in an oven at 60°C for 16 hours, and thus SM-4 sol was obtained. The solid content of the sol was 26.98 mass%.

### SM-5 sol

Into a glass bottle containing 10.0 g of IPA, 0.148 g of KBM5803 and 0.001 g of 4-hydroxy-TEMPO free radical were added. This mixture was added into a glass bottle containing 50 g of IPA-ST-ZL and agitated at room temperature for 10 minutes. This glass bottle was sealed and left in an oven at 60°C for 16 hours, and thus SM-5 sol was obtained. The solid content of the sol was 25.93 mass%.

### SM-6 sol

Into a glass bottle containing 20.0 g of IPA, 0.295 g of KBM5803, 0.381 g of KBM3033, and 0.003 g of 4-hydroxy-TEMPO free radical were added. This mixture was added into a glass bottle containing 100 g of IPA-ST-ZL and agitated at room temperature for 10 minutes. This glass bottle was sealed and left in an oven at 60°C for 16 hours, and thus SM-6 sol was obtained. The solid content of the sol was 26.17 mass%.

### SM-7 sol to SM-14 sol

SM-7 sol to SM-14 sol were prepared in the same manner as in the preparation method for the SM-6 sol except for changing the compositional proportions to those shown in Table 2. The solid contents of these sols are shown in Table 2.

**Table 2**

| Composition | Surface-modified silica sol (part by mass) | | | | | | | | | | | | | |
|---|---|---|---|---|---|---|---|---|---|---|---|---|---|---|
| | SM-1 | SM-2 | SM-3 | SM-4 | SM-5 | SM-6 | SM-7 | SM-8 | SM-9 | SM-10 | SM-11 | SM-12 | SM-13 | SM-14 |
| NALCO (trade name) 2329K | 150.0 | - | - | - | - | - | - | - | - | - | - | - | - | - |
| SNOWTEX (trade name) ST-ZL | - | 100.0 | - | - | - | - | - | - | - | - | - | - | - | - |
| MA-ST-L | - | - | 50.0 | - | - | - | - | - | - | - | - | - | - | - |
| IPA-ST-L | - | - | - | 100.0 | - | - | - | - | - | - | - | - | - | - |
| IPA-ST-ZL | - | - | - | - | 50.0 | 100.0 | 100.0 | 100.0 | 100.0 | 100.0 | 100.0 | 100.0 | 100.0 | 100.0 |
| KBM5803 | 0.588 | 0.395 | 0.330 | 0.595 | 0.148 | 0.295 | 0.295 | 0.295 | 0.295 | 0.295 | 0.295 | 0.295 | 0.591 | 0.886 |
| KBM3033 | - | - | - | - | - | 0.381 | - | - | - | - | - | - | - | - |
| KBM3036 | - | - | - | - | - | - | - | 0.191 | 0.383 | 0.478 | 0.574 | 0.717 | 0.478 | 0.478 |
| Isooctyltrimethoxysilane | 1.081 | 0.721 | 0.607 | 1.095 | - | - | 0.543 | - | - | - | - | - | - | - |
| 4-Hydroxy-TEMPO free radical | 0.006 | 0.004 | 0.003 | 0.006 | 0.001 | 0.003 | 0.003 | 0.003 | 0.003 | 0.003 | 0.003 | 0.003 | 0.006 | 0.009 |
| MeOH | 120.0 | - | 10.0 | - | - | - | - | - | - | - | - | - | - | - |
| MEK | 75.0 | - | - | - | - | - | - | - | - | - | - | - | - | - |
| MIPA | - | 112.5 | - | - | - | - | - | - | - | - | - | - | - | - |
| IPA | - | - | - | 20.0 | 10.0 | 20.0 | 20.0 | 20.0 | 20.0 | 20.0 | 20.0 | 20.0 | 20.0 | 20.0 |
| Solid content (mass%) | 18.22 | 19.90 | 35.56 | 26.98 | 25.93 | 26.17 | 26.27 | 26.05 | 26.17 | 26.23 | 26.29 | 26.37 | 26.41 | 26.59 |

### Preparation of radiation-curable ink

Using the raw materials shown in Table 3-1 to Table 4-4, radiation-curable inks were prepared by the following methods. Table 4-1 to Table 4-4 show compositional proportions (part by mass) in the radiation-curable inks that had a solid content of approximately 100% and that contained no organic solvent after the organic solvent was removed by an evaporator. Note that, for inks having a common number, like "E1" in Table 3-1 to Table 3-4 and Table 4-1 to Table 4-4, for example, "UV-E1" of Table 4-1 is intended to mean a radiation-curable ink, "EVP-E1" in Table 3-1 is intended to mean an ink precursor composition before removal of the organic solvent related to the radiation-curable ink of "UV-E1" in Table 4-1.

### UV ink-E1

After 109.89 g of SM-1 sol was charged in a flask, 20.0 g of CN991NS, 44.0 g of Viscoat (trade name) 196, and 16.0 g of MEDOL-10 were mixed. Then, until the weight change of the solution stopped, the organic solvent was removed from the obtained mixture by using a rotary evaporator at 60 hPa and 55°C. Then, to this mixture, 8.0 g of Omnirad (trade name) 184 was added as a photopolymerization initiator, and thus UV ink-E1 was prepared.

### UV inks-E2 to -E24 and UV ink-C1

UV inks-E2 to E24 and UV ink-C 1 that used no surface-modified silica sol were prepared in the same manner as in the preparation method for UV ink-E1 except for changing the compositional proportions to those shown in Table 3-1 to Table 3-4.

### UV ink-C2: silica particle free

In a flask, 25.0 g of CN991NS, 55.0 g of Viscoat (trade name) 196, and 20.0 g of NOAA were mixed. Then, to the mixture, 10.0 g of Omnirad (trade name) 184 was added as a photopolymerization initiator, and thus UV ink-C2 was prepared.

### UV ink-C3: silica particle-free ink for inkjet printing

In a flask, 30.0 g of CN991NS, 50.0 g of Viscoat (trade name) 196, and 20.0 g of MEDOL-10 were mixed. Then, to the mixture, 10.0 g of Omnirad (trade name) 184 as a photopolymerization initiator, 0.1 g of TEGO (trade name) Flow 425 as a leveling agent, and 0.1 g of Genomer (trade name) 22 as a polymerization inhibitor were added and thus UV ink-C3 for inkjet printing was prepared.

### UV ink-E25: silica particle-containing ink for inkjet printing

In a flask, after 76.141 g of SM-7 was charged, 20.0 g of CN991NS, 44.0 g of Viscoat (trade name) 196, and 16.0 g of NOAA were mixed. Then, until the weight change of the solution stopped, the organic solvent was removed from the obtained mixture by using a rotary evaporator at 60 hPa and 55°C. Then, to this mixture, 8.0 g of Omnirad (trade name) 184 as a photopolymerization initiator and 0.5 g of Genorad (trade name) 22 as a polymerization inhibitor were added and thus UV ink-E25 for inkjet printing was prepared.

**Table 3-1**

| Composition | EVP-E1 | EVP-E2 | EVP-E3 | EVP-E4 | EVP-C1 | EVP-E5 |
|---|---|---|---|---|---|---|
| SM-1 | 109.89 | - | - | - | - | - |
| SM-2 | - | 100.50 | - | - | - | - |
| SM-3 | - | - | 56.24 | - | - | - |
| SM-4 | - | - | - | 111.19 | - | - |
| IPA-ST-ZL | - | - | - | - | 64.13 | - |
| SM-5 | - | - | - | - | - | 77.13 |
| CN991NS | 20.0 | 20.0 | 20.0 | 17.5 | 20.0 | 20.0 |
| SR420NS | - | 44.0 | 44.0 | - | - | - |
| Viscoat (trade name) 196 | 44.0 | - | - | 38.5 | 44.0 | 44.0 |
| MEDOL-10 | 16.0 | 16.0 | 16.0 | 14.0 | 16.0 | 16.0 |

**Table 3-2**

| Composition | EVP-E6 | EVP-E7 | EVP-E8 | EVP-E9 | EVP-E10 | EVP-E11 | EVP-E12 | EVP-E13 | EVP-E14 |
|---|---|---|---|---|---|---|---|---|---|
| SM-6 | 76.43 | - | - | - | - | - | - | - | - |
| SM-7 | - | 76.14 | - | - | - | - | - | - | - |
| SM-8 | - | - | 76.77 | - | - | - | - | - | - |
| SM-9 | - | - | - | 76.43 | - | - | - | - | - |
| SM-10 | - | - | | - | 114.38 | - | - | - | - |
| SM-11 | - | - | - | - | - | 76.09 | - | - | - |
| SM-12 | - | - | - | - | - | - | 75.84 | - | - |
| SM-13 | - | - | - | - | - | - | - | 75.73 | - |
| SM-14 | - | - | - | - | - | - | - | - | 75.22 |
| CN991NS | 20.0 | 20.0 | 20.0 | 20.0 | 20.0 | 20.0 | 20.0 | 20.0 | 20.0 |
| Viscoat (trade name) 196 | 44.0 | 44.0 | 44.0 | 44.0 | 44.0 | 44.0 | 44.0 | 44.0 | 44.0 |
| MEDOL-10 | 16.0 | 16.0 | 16.0 | 16.0 | 16.0 | 16.0 | 16.0 | 16.0 | 16.0 |

**Table 3-3**

| Composition | EVP-E15 | EVP-E16 | EVP-E17 | EVP-E18 | EVP-E19 | EVP-E20 |
|---|---|---|---|---|---|---|
| SM-7 | - | 76.14 | 76.14 | 76.14 | 76.14 | 76.14 |
| SM-10 | 76.26 | - | - | - | - | - |
| CN991NS | 20.0 | 20.0 | 20.0 | 20.0 | 20.0 | 20.0 |
| Viscoat (trade name) 196 | 44.0 | 44.0 | 48.0 | 56.0 | 56.0 | 60.0 |
| NOAA | 16.0 | 16.0 | 12.0 | 8.0 | 4.0 | - |

**Table 3-4**

| Composition | EVP-E15 | EVP-E16 | EVP-E17 | EVP-E23 | EVP-E24 | EVP-C3 | EVP-E25 |
|---|---|---|---|---|---|---|---|
| SM-7 | - | 38.07 | 76.14 | 114.21 | 152.28 | - | 76.14 |
| CN991NS | 25.0 | 22.5 | 20.0 | 17.5 | 15.0 | 30.0 | 20.0 |
| Viscoat (trade name) 196 | 55.0 | 49.5 | 44.0 | 38.5 | 33.0 | 50.0 | 44.0 |
| NOAA | 20.0 | 18.0 | 16.0 | 14.0 | 12.0 | - | 16.0 |
| MEDOL 10 | - | - | - | - | - | 20.0 | - |

**Table 4-1**

| Composition | UV-E1 | UV-E2 | UV-E3 | UV-E4 | UV-C1 | UV-E5 |
|---|---|---|---|---|---|---|
| SM-1 | 20.0 | - | - | - | - | - |
| SM-2 | - | 20.0 | - | - | - | - |
| SM-3 | - | - | 20.0 | - | - | - |
| SM-4 | - | - | - | 30.0 | - | - |
| IPA-ST-ZL | - | - | - | - | 20.0 | - |
| SM-5 | - | - | - | - | - | 20.0 |
| CN991NS | 20.0 | 20.0 | 20.0 | 17.5 | 20.0 | 20.0 |
| SR420NS | - | 44.0 | 44.0 | - | - | - |
| Viscoat (trade name) 196 | 44.0 | - | | 38.5 | 44.0 | 44.0 |
| MEDOL-10 | 16.0 | 16.0 | 16.0 | 14.0 | 16.0 | 16.0 |
| Omnirad (trade name) 184 | 8.0 | 8.0 | 8.0 | 7.0 | 8.0 | 8.0 |

**Table 4-2**

| Composition | UV-E6 | UV-E7 | UV-E8 | UV-E9 | UV-E10 | UV-E11 | UV-E12 | UV-E13 | UV-E14 |
|---|---|---|---|---|---|---|---|---|---|
| SM-6 | 20.0 | - | - | - | - | - | - | - | - |
| SM-7 | - | 20.0 | - | - | - | - | - | - | - |
| SM-8 | - | - | 20.0 | - | - | - | - | - | - |
| SM-9 | - | - | - | 20.0 | - | - | - | - | - |
| SM-10 | - | - | - | - | 20.0 | - | - | - | - |
| SM-11 | - | - | - | - | - | 20.0 | - | - | - |
| SM-12 | - | - | - | - | - | - | 20.0 | - | - |
| SM-13 | - | - | - | - | - | - | - | 20.0 | - |
| SM-14 | - | - | - | - | - | - | - | - | 20.0 |
| CN991NS | 20.0 | 20.0 | 20.0 | 20.0 | 20.0 | 20.0 | 20.0 | 20.0 | 20.0 |
| Viscoat (trade name) 196 | 44.0 | 44.0 | 44.0 | 44.0 | 44.0 | 44.0 | 44.0 | 44.0 | 44.0 |
| MEDOL-10 | 16.0 | 16.0 | 16.0 | 16.0 | 16.0 | 16.0 | 16.0 | 16.0 | 16.0 |
| Omnirad (trade name) 184 | 8.0 | 8.0 | 8.0 | 8.0 | 8.0 | 8.0 | 8.0 | 8.0 | 8.0 |

**Table 4-3**

| Composition | UV-E15 | UV-E16 | UV-E17 | UV-E18 | UV-E19 | UV-E20 |
|---|---|---|---|---|---|---|
| SM-7 | - | 20.0 | 20.0 | 20.0 | 20.0 | 20.0 |
| SM-10 | 20.0 | - | - | - | - | - |
| CN991NS | 20.0 | 20.0 | 20.0 | 20.0 | 20.0 | 20.0 |
| Viscoat (trade name) 196 | 44.0 | 44.0 | 48.0 | 56.0 | 56.0 | 60.0 |
| NOAA | 16.0 | 16.0 | 12.0 | 8.0 | 4.0 | - |
| Omnirad (trade name) 184 | 8.0 | 8.0 | 8.0 | 8.0 | 8.0 | 8.0 |

**Table 4-4**

| Composition | EVP-E15 | EVP-E16 | EVP-E17 | EVP-E23 | EVP-E24 | EVP-C3 | EVP-E25 |
|---|---|---|---|---|---|---|---|
| SM-7 | - | 10.0 | 20.0 | 30.0 | 40.0 | - | 20.0 |
| CN991NS | 25.0 | 22.5 | 20.0 | 17.5 | 15.0 | 30.0 | 20.0 |
| Viscoat (trade name) 196 | 55.0 | 49.5 | 44.0 | 38.5 | 33.0 | 50.0 | 44.0 |
| NOAA | 20.0 | 18.0 | 16.0 | 14.0 | 12.0 | - | 16.0 |
| MEDOL 10 | - | - | - | - | - | 20.0 | - |
| Omnirad (trade name) 184 | 10.0 | 9.0 | 8.0 | 7.0 | 6.0 | 10.0 | 8.0 |
| TEGO (trade name) Flow 425 | - | - | - | - | - | 0.1 | - |
| Genomer (trade name) 22 | - | - | - | - | - | 0.1 | - |
| Genorad (trade name) 22 | - | - | - | - | - | - | 0.5 |

### Example 1

Using a #20 Meyer rod, the radiation-curable ink UV-E1 that was substantially free of organic solvent was coated on a polyvinyl chloride substrate film (3M (trade name) Scotchcal (trade name) graphic film IJ180Cv3-10XR), and thus a coating layer having a thickness of approximately 10 µm was formed. The substrate film to which the coating layer was applied was passed through a UV irradiator (H-valve (DRS model) from Fusion UV System Inc.) in an air atmosphere, and the coating layer was cured. At this time, the coating layer was irradiated with UV light (UV-A) in conditions of an illuminance of 600 mW/cm² and an integrated light quantity of 1000 mJ/cm². In this way, a laminate having a coating layer having a thickness of approximately 10 µm was prepared.

### Examples 2 to 24 and Comparative Examples 1 and 2

The laminates of Examples 2 to 24 and Comparative Examples 1 and 2 were prepared in the same manner as in Example 1 except for using the radiation-curable inks UV-E2 to UV-E24 and UV-C1 and UV-C2 shown in Table 5-1 to Table 5-4.

### Comparative Example 3

Using an inkjet printer (inkjet head KM1024i LMHB, 720 × 720 dpi, Konica Minolta, Inc.) and black UV ink, on a substrate film (3M (trade name) Scotchcal (trade name) graphic film IJ180Cv3-10XR), a black layer formed from the black UV ink and having a thickness of approximately 20 µm was printed. Then, the black layer was cured by irradiation with UV radiation at an illuminance of 366 mW/cm² using a high-pressure mercury lamp. On the obtained black layer, using an inkjet printer and UV-C3, which was a transparent radiation-curable ink, a transparent inkjet printing layer having a thickness of approximately 50 µm was printed while the ink was heated at 55°C. The transparent inkjet printing layer was then cured by irradiation with UV radiation at an illuminance of 1212 mW/cm² using a high-pressure mercury lamp. In this manner, a laminate of Comparative Example 3 having a black layer having a thickness of approximately 20 µm and a transparent inkjet printing layer having a thickness of approximately 50 µm, in this order, on the substrate was prepared. Here, the black UV ink was prepared as described below.

In a glass bottle, 10.00 g of Viscoat (trade name) 190, 10.00 g of Viscoat (trade name) 192, 46.15 g of SR420NS, 21.00 g of CN991NS, and 5.00 g of BP were mixed. Then, 5.00 g of Chivacure (trade name) TPO as a photopolymerization initiator, 0.10 g of Lignostab (trade name) 1198 as a photostabilizer, 0.10 g of Irgastab (trade name) UV25 as an anti-gelling agent, 0.90 g of TEGO (trade name) Flow 425 as a leveling agent, and 1.80 g of PBk 7 as a black pigment were added to the mixture and agitated, and thus the black UV ink was prepared.

### Example 25

A laminate of Example 25 was prepared in the same manner as in Comparative Example 1 except for using UV-E25, which was the radiation-curable ink, shown in Table 5-4.

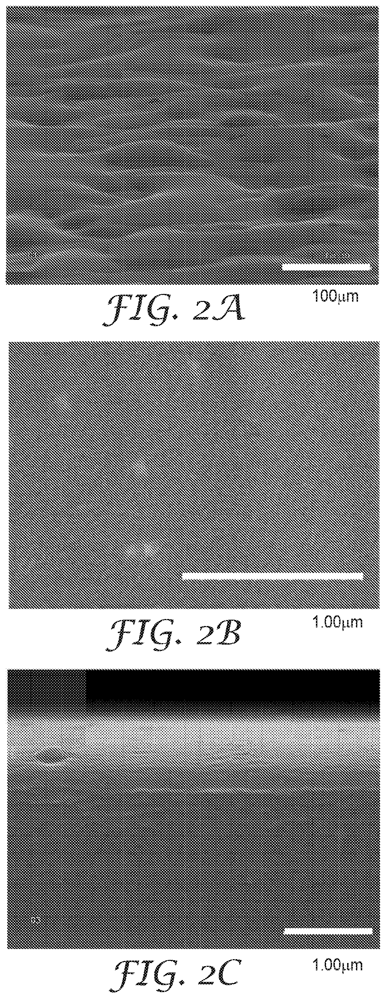

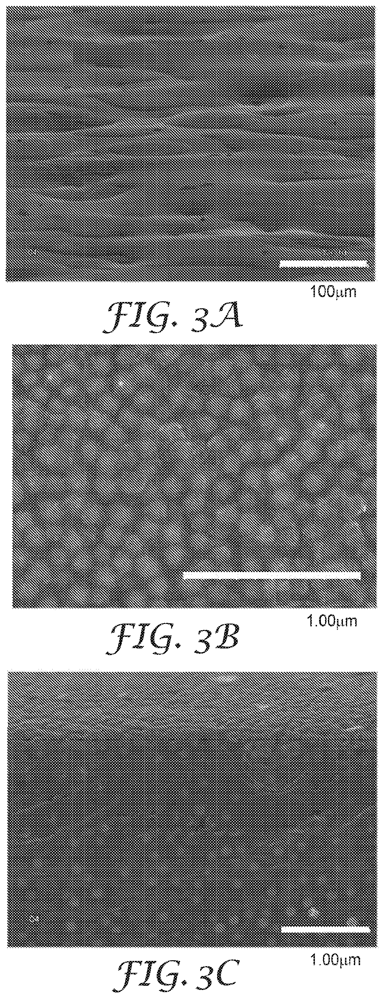

The following evaluations were performed on the samples of Examples 1 to 25 and Comparative Examples 1 to 3, and the results are shown in Table 5-1 to Table 5-4. Furthermore, scanning electron microscope photographs of the inkjet printing layers in the laminates of Comparative Example 3 and Example 25 and the optical photomicrographs of the laminate surfaces after the Taber abrasion test are shown in FIGS. 2A-2C to FIGS. 4A-4B.

### Initial viscosity

The initial viscosity at 55°C of the radiation-curable ink was measured by Discovery HR-2 (DHR-2) rheometer (available from TA Instruments) at a rotation speed of 150 times/min by using a 20 mm cone plate type parallel plate (available from TA Instruments).

### Coatability or dischargeability

The coatability or dischargeability of the radiation-curable ink was evaluated by visual observation. The case where failures, including coating unevenness such as lines and breakage part, occurred on the coating layer or the inkjet printing layer or the case where clogging in an inkjet nozzle occurred was evaluated as "Poor". The case where these failures did not occur and a substantially smooth coating layer or inkjet printing layer was formed was evaluated as "Good".

### Wear resistance

The wear resistance of each of the laminates was evaluated by Taber abrasion test in accordance with JIS K 7204. Using AB-101 Taber abrasion tester (available from Tester Sangyo Co., Ltd.), a wear ring CS-17 was rotated for 5000 times on the sample surface of the laminate at room temperature. The sample surface was visually observed, and the case where at least a part of the base was exposed as shown in FIG. 4A was evaluated as "Poor", and the case where the base was not exposed as shown in FIG. 4B was evaluated as "Good".

### Storage stability

The radiation-curable ink was stored in an oven at 60°C for 1 week. The viscosity at 55°C of the ink after the storage was measured by Discovery HR-2 (DHR-2) rheometer (available from TA Instruments) at a rotation speed of 150 times/min by using a 20 mm cone plate type parallel plate (available from TA Instruments). The case where the viscosity of the ink was greater than 18.0 mPa·s was evaluated as "Poor", and the case where the viscosity was 18.0 mPa·s or less was evaluated as "Good".

### Adhesion

The adhesion performances between the substrate film and the coating layer, and between the black layer and the inkjet printing layer were evaluated according to the cross-cut method in accordance with JIS K 5600. Here, a 5 × 5 grid with a grid spacing of 1 mm and Cellotape (trade name) CT-24 (available from Nichiban Co., Ltd.) were employed. The case where no peeling occurred in the coating layer or the inkjet printing layer was evaluated as "Good", and the case where peeling occurred was evaluated as "Poor".

### Elongation at break

A test sample was prepared by cutting each of the laminates into a length of 100 mm and a width of 25 mm, and elongation at the time when the coating layer or the inkjet printing layer of the test sample was broken was measured at a nipping distance of 50 mm, a tensile speed of 300 mm/min, and 20°C by using a tensile tester (TENSILON Universal Testing Machine, model: RTC-1210A, available from A&D Company, Limited). From the expression: (length at break of test sample - length before elongation of test sample)/(length before elongation of test sample) x 100 (%), the elongation at break was determined.

**Table 5-1**

| | | Example 1 | Example 2 | Example 3 | Example 4 | Comparative Example 1 | Example 5 |
|---|---|---|---|---|---|---|---|
| Radiation-curable ink | | UV-E1 | UV-E2 | UV-E3 | UV-E4 | UV-C1 | UV-E5 |
| Silica particle-related component | Surface-modified SiO₂ sol | SM-1 | SM-2 | SM-3 | SM-4 | - | SM-5 |
| | SiO₂ particle content (mass%) | 20 | 20 | 20 | 30 | 20 | 20 |
| | Proportion of KBM5803 per 1 g of SiO₂ particles (mmol/g) | 0.030 | 0.030 | 0.030 | 0.030 | - | 0.030 |
| | Proportion of KBM3033 per 1 g of SiO₂ particles (mmol/g) | - | - | - | - | - | - |
| | Proportion of KBM3063 per 1 g of SiO₂ particles (mmol/g) | - | - | - | - | - | - |
| | Proportion of isooctylsilane per 1 g of SiO₂ particles (mmol/g) | 0.075 | 0.075 | 0.075 | 0.075 | - | - |
| Resin component (mass%) | CN991NS | 20.0 | 20.0 | 20.0 | 17.5 | 20.0 | 20.0 |
| | SR420NS | - | 44.0 | 44.0 | - | - | - |
| | Viscoat (trade name) 196 | 44.0 | - | - | 38.5 | 44.0 | 44.0 |
| | MEDOL-10 | 16.0 | 16.0 | 16.0 | 14.0 | 16.0 | 16.0 |
| | NOAA | - | - | - | - | - | - |
| Evaluation result | Initial viscosity (mPa·s) | 10.4 | 12.9 | 16.1 | 17.4 | 19.2 | 17.1 |
| | Coatability or dischargeability | Good | Good | Good | Good | Poor | Good |
| | Wear resistance | Good | Good | Good | Good | Good | Good |
| | Storage stability | Poor | Good | Poor | Poor | Poor | Poor |
| | Adhesion | Good | Good | Good | Good | Good | Good |
| | Elongation at break (%) | 102 | 105 | Not measured | Not measured | Not measured | 88 |

**Table 5-2**

| | | Example 6 | Example 7 | Example 8 | Example 9 | Example 10 | Example 11 | Example 12 | Example 13 | Example 14 |
|---|---|---|---|---|---|---|---|---|---|---|
| Radiation-curable ink | | UV-E6 | UV-E7 | UV-E8 | UV-E9 | UV-E10 | UV-E11 | UV-E12 | UV-E13 | UV-E14 |
| Silica particle-related component | Surface-modified SiO₂ sol | SM-6 | SM-7 | SM-8 | SM-9 | SM-10 | SM-11 | SM-12 | SM-13 | SM-14 |
| | SiO₂ particle content (mass%) | 20 | 20 | 20 | 30 | 20 | 20 | 20 | 20 | 20 |
| | Proportion of KBM5803 per 1 g of SiO₂ particles (mmol/g) | 0.030 | 0.030 | 0.030 | 0.030 | 0.030 | 0.030 | 0.030 | 0.060 | 0.090 |
| | Proportion of KBM3033 per 1 g of SiO₂ particles (mmol/g) | 0.075 | - | - | - | - | - | - | - | - |
| | Proportion of KBM3063 per 1 g of SiO₂ particles (mmol/g) | - | - | 0.030 | 0.060 | 0.075 | 0.090 | 0.113 | 0.075 | 0.075 |
| | Proportion of isooctylsilane per 1 g of SiO₂ particles (mmol/g) | - | 0.075 | 0.113 | - | - | - | - | - | - |
| Resin component (mass%) | CN991NS | 20.0 | 20.0 | 20.0 | 20.0 | 20.0 | 20.0 | 20.0 | 20.0 | 20.0 |
| | SR420NS | - | - | - | - | - | - | - | - | - |
| | Viscoat (trade name) 196 | 44.0 | 44.0 | 44.0 | 44.0 | 44.0 | 44.0 | 44.0 | 44.0 | 44.0 |
| | MEDOL-10 | 16.0 | 16.0 | 16.0 | 16.0 | 14.0 | 16.0 | 14.0 | 16.0 | 16.0 |
| | NOAA | - | - | - | - | - | - | - | - | - |
| Evaluation result | Initial viscosity (mPa· s) | 12.1 | 12.9 | 11.5 | 11.3 | 12.2 | 11.6 | 17.1 | 12.3 | 11.5 |
| | Coatability or dischargeability | Good | Good | Good | Good | Good | Good | Good | Good | Good |
| | Wear resistance | Good | Good | Good | Good | Good | Good | Good | Good | Good |
| | Storage stability | Good | Good | Good | Good | Good | Good | Poor | Good | Good |
| | Adhesion | Good | Good | Good | Good | Good | Good | Good | Good | Good |
| | Elongation at break (%) | 101 | 108 | 92 | 94 | Not measured | 100 | Not measured | 94 | 90 |

**Table 5-3**

| | | Example 15 | Example 16 | Example 17 | Example 18 | Example 19 | Example 20 |
|---|---|---|---|---|---|---|---|
| Radiation-curable ink | | UV-E15 | UV-E16 | UV-E17 | UV-E18 | UV-E19 | UV-E20 |
| Silica particle-related component | Surface-modified SiO₂ sol | SM-10 | SM-7 | SM-7 | SM-7 | SM-7 | SM-7 |
| | SiO₂ particle content (mass%) | 20 | 20 | 20 | 30 | 20 | 20 |
| | Proportion of KBM5803 per 1 g of SiO₂ particles (mmol/g) | 0.030 | 0.030 | 0.030 | 0.030 | 0.030 | 0.030 |
| | Proportion of KBM3033 per 1 g of SiO₂ particles (mmol/g) | - | - | - | - | - | - |
| | Proportion of KBM3063 per 1 g of SiO₂ particles (mmol/g) | 0.075 | - | - | - | - | - |
| | Proportion of isooctylsilane per 1 g of SiO₂ particles (mmol/g) | - | 0.075 | 0.075 | 0.075 | 0.075 | 0.075 |
| Resin component (mass%) | CN991NS | 20.0 | 20.0 | 20.0 | 20.0 | 20.0 | 20.0 |
| | SR420NS | - | - | - | - | - | - |
| | Viscoat (trade name) 196 | 44.0 | 44.0 | 48.0 | 52.0 | 56.0 | 60.0 |
| | MEDOL-10 | - | - | - | - | - | - |
| | NOAA | 16.0 | 16.0 | 12.0 | 8.0 | 4.0 | - |
| Evaluation result | Initial viscosity (mPa·s) | 9.8 | 9.4 | 9.4 | 9.7 | 9.9 | 10.1 |
| | Coatability or dischargeability | Good | Good | Good | Good | Good | Good |
| | Wear resistance | Good | Good | Good | Good | Good | Good |
| | Storage stability | Good | Good | Good | Good | Good | Good |
| | Adhesion | Good | Good | Good | Good | Good | Good |
| | Elongation at break (%) | Not measured | 118 | 117 | 111 | 99 | 97 |

**Table 5-4**

| | | Comparative Example 2 | Example 21 | Example 22 | Example 23 | Example 24 | Comparative Example 3 | Example 25 |
|---|---|---|---|---|---|---|---|---|
| Radiation-curable ink | | UV-C2 | UV-E21 | UV-E22 | UV-E23 | UV-E24 | UV-C3 | UV-E25 |
| Silica particle-related component | Surface-modified SiO₂ sol | - | SM-7 | SM-7 | SM-7 | SM-7 | - | SM-7 |
| | SiO₂ particle content (mass%) | - | 10 | 20 | 30 | 40 | - | 20 |
| | Proportion of KBM5803 per 1 g of SiO₂ particles (mmol/g) | - | 0.030 | 0.030 | 0.030 | 0.030 | - | 0.030 |
| | Proportion of KBM3033 per 1 g of SiO₂ particles (mmol/g) | - | - | - | - | - | - | - |
| | Proportion of KBM3063 per 1 g of SiO₂ particles (mmol/g) | - | - | - | - | - | - | - |
| | Proportion of isooctylsilane per 1 g of SiO₂ particles (mmol/g) | - | 0.075 | 0.075 | 0.075 | 0.075 | - | 0.075 |
| Resin component (mass%) | CN991NS | 25.0 | 22.5 | 20.0 | 17.5 | 15.0 | 30.0 | 20.0 |
| | SR420NS | - | - | - | - | - | - | - |
| | Viscoat (trade name) 196 | 55.0 | 49.5 | 44.0 | 38.5 | 33.0 | 50.0 | 44.0 |
| | MEDOL-10 | - | - | - | - | - | 20.0 | - |
| | NOAA | 20.0 | 18.0 | 16.0 | 14.0 | 12.0 | - | 16.0 |
| Evaluation result | Initial viscosity (mPa·s) | 5.3 | 10.8 | 9.4 | 10.3 | 13.3 | 11.9 | 9.4 |
| | Coatability or dischargeability | Good | Good | Good | Good | Good | Good | Good |
| | Wear resistance | Poor | Good | Good | Good | Good | Poor | Good |
| | Storage stability | Good | Good | Good | Good | Good | Good | Good |
| | Adhesion | Good | Good | Good | Good | Good | Good | Good |
| | Elongation at break (%) | 138 | 133 | 119 | 112 | 93 | 130 | 118 |

### Reference Signs List

100 Laminate
101 Substrate
102 Wear-resistant layer
103 Inorganic nanoparticle
104 Binder resin

## Claims

1. A laminate comprising:
a substrate, and
a wear-resistant layer containing a cured product of a radiation-curable ink,
the radiation-curable ink containing inorganic nanoparticles, a compound represented by Formula (1), and at least one selected from the group consisting of a radiation-curable polymerizable oligomer and a radiation-curable polymerizable monomer:
R¹-R²-Si(OR³)₃ Formula (1)
wherein
R¹ is an acryloyl group or a methacryloyl group,
R² is an alkylene group having from 5 to 12 carbon atoms, and
R³ is an alkyl group having from 1 to 4 carbon atoms.

2. The laminate according to claim 1, wherein the compound represented by Formula (1) is 8-(meth)acryloxyoctyltrimethoxysilane.

3. The laminate according to claim 1 or 2, wherein the radiation-curable ink further contains a non-functional silane coupling agent.

4. The laminate according to any one of claims 1 to 3, wherein the radiation-curable ink contains a bifunctional urethane (meth)acrylate oligomer that is a radiation-curable polymerizable oligomer.

5. The laminate according to any one of claims 1 to 4, wherein a compounded amount of each of the compound represented by Formula (1) and the non-functional silane coupling agent in a case that the non-functional silane coupling agent is present is in a range from 0.030 to 0.090 mmol per 1 g of the inorganic nanoparticles.

6. The laminate according to any one of claims 1 to 5, wherein the inorganic nanoparticles are contained in a proportion from 10 to 40 mass% relative to a total weight of the wear-resistant layer.

7. The laminate according to any one of claims 1 to 6, wherein an average particle size of the inorganic nanoparticles is 30 nm or grater and 400 nm or less, measured according to the description.

8. The laminate according to any one of claims 1 to 7, wherein the wear-resistant layer is not peeled off in a 2000-time Taber abrasion test, measured according to the description.

9. The laminate according to any one of claims 1 to 8, wherein the laminate has elongation at break of 50% or greater at 20°C, measured according to the description.

10. The laminate according to any one of claims 1 to 9, wherein the laminate is used for decoration.

11. A radiation-curable ink comprising:
inorganic nanoparticles,
a compound represented by Formula (1)
R¹-R²-Si(OR³)₃ Formula (1)
wherein
R¹ is an acryloyl group or a methacryloyl group,
R² is an alkylene group having from 5 to 12 carbon atoms, and
R³ is an alkyl group having from 1 to 4 carbon atoms, and
at least one selected from the group consisting of a radiation-curable polymerizable oligomer and a radiation-curable polymerizable monomer,
the radiation-curable ink having an initial viscosity at 55°C that is 18.0 mPa·s or less, measured according to the description.

12. The ink according to claim 11, wherein the compound represented by Formula (1) is 8-(meth)acryloxyoctyltrimethoxysilane.

13. The ink according to claim 11 or 12, further comprising a non-functional silane coupling agent.

14. The ink according to any one of claims 11 to 13, comprising a bifunctional urethane (meth)acrylate oligomer that is a radiation-curable polymerizable oligomer.

15. The ink according to any one of claims 11 to 14, wherein a compounded amount of each of the compound represented by Formula (1) and the non-functional silane coupling agent in a case that the non-functional silane coupling agent is present is in a range from 0.030 to 0.090 mmol per 1 g of the inorganic nanoparticles.

16. The ink according to any one of claims 11 to 15, wherein viscosity at 55°C after storage for 1 week at 60°C is 18.0 mPa·s less, measured according to the description.

17. The ink according to any one of claims 11 to 16, wherein a content of a solvent is 5 mass% or less.

## Patentansprüche

1. Ein Laminat, umfassend:
ein Substrat und
eine verschleißfeste Schicht, die ein gehärtetes Produkt einer strahlungshärtbaren Tinte enthält,
wobei die strahlungshärtbare Tinte anorganische Nanoteilchen, eine Verbindung, die durch Formel (1) dargestellt wird, und mindestens eine, die aus der Gruppe ausgewählt ist, bestehend aus einem strahlungshärtbaren polymerisierbaren Oligomer und einem strahlungshärtbaren polymerisierbaren Monomer, enthält:
R¹-R²-Si(OR³)₃ Formel (1)
wobei
R¹ eine Acryloylgruppe oder eine Methacryloylgruppe ist,
R² eine Alkylengruppe ist, die von 5 bis 12 Kohlenstoffatome aufweist, und
R³ eine Alkylgruppe ist, die 1 bis 4 Kohlenstoffatome aufweist.

2. Das Laminat nach Anspruch 1, wobei die Verbindung, die durch Formel (1) dargestellt wird, 8-(Meth)acryloxyoctyltrimethoxysilan ist.

3. Das Laminat nach Anspruch 1 oder 2, wobei die strahlungshärtbare Tinte ferner einen nichtfunktionellen Silanhaftvermittler enthält.

4. Das Laminat nach einem der Ansprüche 1 bis 3, wobei die strahlungshärtbare Tinte ein bifunktionelles Urethan(meth)acrylatoligomer enthält, das ein strahlungshärtbares polymerisierbares Oligomer ist.

5. Das Laminat nach einem der Ansprüche 1 bis 4, wobei die gemischte Menge jeder der Verbindung, die durch Formel (1) dargestellt wird, und des nichtfunktionellen Silanhaftvermittlers, in einem Fall, dass der nichtfunktionelle Silanhaftvermittler vorhanden ist, jeweils in einem Bereich von 0,030 bis 0,090 mmol pro 1 g der anorganischen Nanoteilchen liegt.

6. Das Laminat nach einem der Ansprüche 1 bis 5, wobei die anorganischen Nanoteilchen in einem Anteil von 10 bis 40 Massen-% relativ zu einem Gesamtgewicht der verschleißfesten Schicht enthalten sind.

7. Das Laminat nach einem der Ansprüche 1 bis 6, wobei eine durchschnittliche Teilchengröße der anorganischen Nanoteilchen 30 nm oder mehr und 400 nm oder weniger beträgt, gemessen gemäß der Beschreibung.

8. Das Laminat nach einem der Ansprüche 1 bis 7, wobei sich die verschleißfeste Schicht in einem 2000-fachen Taber-Abriebtest, gemessen gemäß der Beschreibung, nicht ablöst.

9. Das Laminat nach einem der Ansprüche 1 bis 8, wobei das Laminat eine Bruchdehnung von 50 % oder mehr bei 20 °C aufweist, gemessen gemäß der Beschreibung.

10. Das Laminat nach einem der Ansprüche 1 bis 9, wobei das Laminat für eine Dekoration verwendet wird.

11. Eine strahlungshärtbare Tinte, umfassend: anorganische Nanoteilchen, eine Verbindung, die durch die Formel (1) dargestellt wird
R¹-R²-Si(OR³)₃ Formel (1)
wobei
R¹ eine Acryloylgruppe oder eine Methacryloyl gruppe ist,
R² eine Alkylengruppe ist, die von 5 bis 12 Kohlenstoffatome aufweist, und
R³ eine Alkylgruppe ist, die 1 bis 4 Kohlenstoffatome aufweist; und
mindestens eines, das aus der Gruppe ausgewählt ist, bestehend aus einem strahlungshärtbaren polymerisierbaren Oligomer und einem strahlungshärtbaren polymerisierbaren Monomer,
die strahlenhärtbare Tinte, die eine Anfangsviskosität bei 55 °C von 18,0 mPa s oder weniger aufweist, gemessen gemäß der Beschreibung.

12. Die Tinte nach Anspruch 11, wobei die Verbindung, die durch Formel (1) dargestellt wird, 8-(Meth)acryloxyoctyltrimethoxysilan ist.

13. Die Tinte nach Anspruch 11 oder 12, ferner umfassend einen nichtfunktionellen Silanhaftvermittler.

14. Die Tinte nach einem der Ansprüche 11 bis 13, umfassend ein bifunktionelles Urethan(meth)acrylatoligomer, das ein strahlungshärtbares polymerisierbares Oligomer ist.

15. Die Tinte nach einem der Ansprüche 11 bis 14, wobei die gemischte Menge jeder der Verbindung, die durch Formel (1) dargestellt wird, und des nichtfunktionellen Silanhaftvermittlers, in einem Fall, dass der nichtfunktionelle Silanhaftvermittler vorhanden ist, in einem Bereich von 0,030 bis 0,090 mmol pro 1 g der anorganischen Nanoteilchen liegt.

16. Die Tinte nach einem der Ansprüche 11 bis 15, wobei eine Viskosität bei 55 °C nach einer Lagerung für 1 Woche bei 60 °C 18,0 mPa·s oder weniger beträgt, gemessen gemäß der Beschreibung.

17. Die Tinte nach einem der Ansprüche 11 bis 16, wobei ein Gehalt eines Lösungsmittels 5 Massen-% oder weniger beträgt.

## Revendications

1. Stratifié comprenant :
un substrat, et
une couche résistante à l'usure contenant un produit durci d'une encre durcissable par rayonnement, l'encre durcissable par rayonnement contenant des nanoparticules inorganiques, un composé représenté par la formule (1) et au moins un composé choisi dans le groupe constitué d'un oligomère polymérisable durcissable par rayonnement et d'un monomère polymérisable durcissable par rayonnement :
R¹-R²-Si(OR³)₃ Formule (1)
où
R¹ représente un groupe acryloyle ou un groupe méthacryloyle,
R² représente un groupe alkylène comprenant de 5 à 12 atomes de carbone, et
R³ représente un groupe alkyle comprenant de 1 à 4 atomes de carbone.

2. Stratifié selon la revendication 1, le composé représenté par la formule (1) étant le 8-(méth)acryloxyoctyltriméthoxysilane.

3. Stratifié selon la revendication 1 ou 2, l'encre durcissable par rayonnement contenant en outre un agent de couplage au silane non fonctionnel.

4. Stratifié selon l'une quelconque des revendications 1 à 3, l'encre durcissable par rayonnement contenant un oligomère d'uréthane-(méth)acrylate bifonctionnel qui est un oligomère polymérisable durcissable par rayonnement.

5. Stratifié selon l'une quelconque des revendications 1 à 4, une quantité mélangée de chacun du composé représenté par la formule (1) et de l'agent de couplage au silane non fonctionnel, dans le cas où l'agent de couplage au silane non fonctionnel est présent, étant située dans une plage de 0,030 à 0,090 mmole par 1 g des nanoparticules inorganiques.

6. Stratifié selon l'une quelconque des revendications 1 à 5, les nanoparticules inorganiques étant contenues en une proportion de 10 à 40 % en masse par rapport à un poids total de la couche résistante à l'usure.

7. Stratifié selon l'une quelconque des revendications 1 à 6, la taille de particule moyenne des nanoparticules inorganiques étant de 30 nm ou plus et de 400 nm ou moins, mesurée conformément à la description.

8. Stratifié selon l'une quelconque des revendications 1 à 7, la couche résistante à l'usure n'étant pas décollée lors d'un test de résistance à l'usure selon Taber de 2000 tours, mesuré conformément à la description.

9. Stratifié selon l'une quelconque des revendications 1 à 8, le stratifié présentant un allongement à la rupture de 50 % ou plus à 20 °C, mesuré conformément à la description.

10. Stratifié selon l'une quelconque des revendications 1 à 9, le stratifié étant utilisé pour la décoration.

11. Encre durcissable par rayonnement comprenant : des nanoparticules inorganiques,
un composé représenté par la formule (1)
R¹-R²-Si(OR³)₃ Formule (1)
où
R¹ représente un groupe acryloyle ou un groupe méthacryloyle,
R² représente un groupe alkylène comprenant de 5 à 12 atomes de carbone, et
R³ représente un groupe alkyle comprenant de 1 à 4 atomes de carbone, et
au moins un composé choisi dans le groupe constitué d'un oligomère polymérisable durcissable par rayonnement et d'un monomère polymérisable durcissable par rayonnement,
l'encre durcissable par rayonnement présentant une viscosité initiale à 55 °C qui est inférieure ou égale à 18,0 mPa.s, mesurée conformément à la description.

12. Encre selon la revendication 11, le composé représenté par la formule (1) étant le 8-(méth)acryloxyoctyltriméthoxysilane.

13. Encre selon la revendication 11 ou 12, comprenant en outre un agent de couplage au silane non fonctionnel.

14. Encre selon l'une quelconque des revendications 11 à 13, comprenant un oligomère d'uréthane-(méth)acrylate bifonctionnel qui est un oligomère polymérisable durcissable par rayonnement.

15. Encre selon l'une quelconque des revendications 11 à 14, une quantité mélangée de chacun du composé représenté par la formule (1) et de l'agent de couplage au silane non fonctionnel, dans le cas où l'agent de couplage au silane non fonctionnel est présent, étant située dans une plage de 0,030 à 0,090 mmole par 1 g de nanoparticules inorganiques.

16. Encre selon l'une quelconque des revendications 11 à 15, la viscosité à 55 °C après un stockage pendant 1 semaine à 60 °C étant inférieure ou égale à 18,0 mPa.s, mesurée conformément à la description.

17. Encre selon l'une quelconque des revendications 11 à 16, la teneur en solvant étant inférieure ou égale à 5 % en masse.
